# EUROPEAN PATENT SPECIFICATION

(11) **EP 4 199 623 B1**
(45) Date of publication and mention of the grant of the patent: **30.07.2025**
(21) Application number: 21919099.8
(22) Date of filing: 16.12.2021
(51) Int. Cl.: H04W 74/0816, H04W 84/12, H04W 72/0446

(54) **METHOD FOR RECOVERING RIGHT TO USE TRANSMISSION OPPORTUNITY, AND RELATED APPARATUS**
VERFAHREN ZUR WIEDERHERSTELLUNG DER NUTZUNGSBERECHTIGUNG FÜR ÜBERTRAGUNGSGELEGENHEIT UND ZUGEHÖRIGE VORRICHTUNG
PROCÉDÉ DE RÉCUPÉRATION DE DROIT D'UTILISER UNE OPPORTUNITÉ DE TRANSMISSION, ET APPAREIL ASSOCIÉ

(30) Priority: 15.01.2021 CN 202110056633; 22.04.2021 CN 202110437428
(43) Date of publication of application: 21.06.2023
(60) Divisional application: 25184727.3
(73) Proprietor: Huawei Technologies Co., Ltd., Shenzhen, Guangdong 518129 (CN)
(72) Inventor: YANG, Mao, Beilin District Xi'an, Shaanxi 710072 (CN); LI, Bo, Beilin District Xi'an, Shaanxi 710072 (CN); LI, Yunbo, Shenzhen, Guangdong 518129 (CN); GAN, Ming, Shenzhen, Guangdong 518129 (CN)
(74) Representative: Thun, Clemens
(86) International application number: PCT/CN2021/138887
(87) International publication number: WO 2022/151912

(56) References cited:
- WO-A1-2018/236422
- CN-A- 102 843 785
- CN-A- 104 202 822
- CN-A- 106 922 035
- CN-A- 107 241 798
- CN-A- 108 432 171
- US-A1- 2007 248 117
- US-A1- 2019 044 586

## Description

### TECHNICAL FIELD

This application relates to the field of wireless communication technologies, and in particular, to a method for recovering permission to use a transmission opportunity and a related apparatus.

### BACKGROUND

The 802.11 protocol suite is communication standards defined by the Institute of Electrical and Electronics Engineers (institute of electrical and electronics engineers, IEEE) for a wireless local area network (wireless local area network, WLAN). Starting from the IEEE 802.11a/b/g to the IEEE 802.11n and IEEE 802.11ac, the IEEE 802.11ax and IEEE 802.11be are under development.

Generally, a physical layer (physical layer, PHY) frame in the IEEE 802.11 standards is also referred to as a physical layer protocol data unit (PHY protocol data unit, PPDU). The IEEE 802.11ax standard proposes four frame structures: a high efficiency single-user PPDU (high efficiency single-user PPDU, HE SU PPDU), a high efficiency multi-user PPDU (high efficiency multi-user PPDU, HE MU PPDU), a high efficiency trigger-based PPDU (high efficiency trigger based PPDU, HE TB PPDU), and a high efficiency extended range PPDU (high efficiency extended range PPDU, HE ER PPDU). In the IEEE 802.11ax standard, the HE SU PPDU is applied to a scenario in which a station (station, STA) transmits data to another STA, and may be applied to uplink transmission and downlink transmission. The HE TB PPDU is applied to a scenario in which an access point (access point, AP) sends a trigger frame (Trigger Frame, TF) to schedule a non-AP STA for uplink transmission.

In the current IEEE 802.11ax standard, the trigger frame can trigger only the HE TB PPDU, but cannot trigger the HE SU PPDU. However, because the AP usually has a stronger channel access capability, a next-generation IEEE 802.11be standard needs to support an SU PPDU triggered by the AP. Therefore, to implement the SU PPDU triggered by the AP, the AP may send a single-user trigger frame, to allocate a portion or all of remaining time resources in a transmission opportunity (transmission opportunity, TXOP) to an associated STA (for ease of description, referred to as a specified STA for short below), so that the specified STA can communicate with another STA or the AP in an allocated time resource. However, if duration of the time resource allocated by the AP to the specified STA is long, and the specified STA has completed required transmission after using the time resource for a period of time (in other words, there is remaining duration in the allocated time resource), or after using the time resource for a period of time, the specified STA finds that remaining duration is insufficient to send a complete SU PPDU, the remaining duration causes a waste of a channel resource, and may allow another station to obtain permission to use a channel through contention. However, the AP cannot recover permission to use the TXOP. Therefore, how to improve channel utilization and TXOP recovery reliability becomes an urgent issue to be resolved currently.

Further, US 2007/248117 A1 refers to a method for using the remaining TxOP time by the peer node to forward traffic to a different destination, a method for using the remaining TxOP time by the original node to send traffic to a different destination, a method for using the remaining TxOP time by a neighbor to send traffic to the original node, a method for using the remaining TxOP time by a neighbor to send traffic to another node, a method to signal the reuse rules of the remaining TxOP time, and a method to efficiently relinquish/truncate a TxOP to reset the NAV for the neighborhood.

Further, WO 2018/236422 A1 refers to methods, apparatus, systems, and articles of manufacture to manage coordinated peer-to-peer communications in a wireless network. An example apparatus operating as an access point includes a trigger frame generator to generate a trigger frame identifying a first wireless station to receive the trigger frame and a transmission time period for the first wireless station to communicate with a second wireless station in a peer-to-peer mode, and a component interface to transmit the trigger frame to the first wireless station.

Further, US 2019/044586 A1 refers to methods and an apparatus for transmission opportunity limits, backoff procedures, and an uplink random access related to an uplink multi-user transmission in a High Efficiency WLAN (HEW).

Further, CN 102 843 785 A refers to a method and a device for transmission of a reverse protocol in a wireless local network (WLCN). A method for transmission multiuser data in a reverse protocol comprises the following steps that: if the TXOP (Transmission Opportunity) is unfinished after a first site completes data sending to an AP (Access Point), the AP obtains the TXOP in one TXOP of the first site, wherein the AP obtains the TXOP through taking the first site as a reverse protocol initiator to endow the rest part of the TXOP with the AP; and the AP sends second data to at least two sites in the TXOP, wherein the at least two sites comprises the first site.

### SUMMARY

Embodiments of this application provide a method for recovering permission to use a transmission opportunity and a related apparatus, to improve channel resource utilization and reliability of recovering the permission to use the TXOP. This problem is solved by the subject matter of the independent claims. Further implementation forms are provided in the dependent claims.

### BRIEF DESCRIPTION OF DRAWINGS

FIG. 1a is a schematic diagram of an architecture of a communication system according to this application;
FIG. 1b is a schematic diagram of a structure of an access point according to this application;
FIG. 1c is a schematic diagram of a structure of a STA with a single antenna/radio frequency;
FIG. 2a is a schematic diagram of applying a single-user trigger frame to a P2P scenario;
FIG. 2b is a schematic diagram of applying a single-user trigger frame to a UL transmission scenario;
FIG. 2c is a schematic diagram of remaining duration;
FIG. 3 is a schematic flowchart of a method for recovering permission to use a transmission opportunity according to this application;
FIG. 4 is a schematic diagram of a structure of a first frame according to this application;
FIG. 5 is a schematic diagram of an application scenario of recovering permission to use a TXOP in a UL scenario according to this application;
FIG. 6 is a schematic diagram of an application scenario of recovering permission to use a TXOP in a P2P scenario according to this application:
FIG. 7 is another schematic diagram of a structure of a first frame according to this application;
FIG. 8 is another schematic diagram of a structure of a first frame according to this application;
FIG. 9 is a schematic diagram of another application scenario of recovering permission to use a TXOP in a UL scenario according to this application;
FIG. 10 is a schematic diagram of another application scenario of recovering permission to use a TXOP in a P2P scenario according to this application;
FIG. 11(a) is another schematic diagram of a structure of a first frame according to this application;
FIG. 11(b) is another schematic diagram of a structure of a first frame according to this application;
FIG. 12 is a schematic diagram of a structure of a frame control (Frame Control) field according to this application;
FIG. 13 is a schematic diagram of a scenario in which cross-boundary transmission of an SU END frame is allowed in a UL scenario according to this application;
FIG. 14 is a schematic diagram of a scenario in which cross-boundary transmission of an SU END frame is allowed in a P2P scenario according to this application;
FIG. 15 is a schematic diagram of another application scenario of recovering permission to use a TXOP in a P2P scenario according to this application:
FIG. 16 is another schematic flowchart of a method for recovering permission to use a transmission opportunity according to this application:
FIG. 17 is a schematic diagram of a scenario of recovering permission to use a TXOP based on preset duration T in a P2P scenario according to this application;
FIG. 18 is another schematic flowchart of a method for recovering permission to use a transmission opportunity according to this application:
FIG. 19 is a schematic diagram of a scenario of recovering permission to use a TXOP based on preset duration T in a UL scenario according to this application;
FIG. 20 is another schematic flowchart of a method for recovering permission to use a transmission opportunity according to this application:
FIG. 21 is a schematic diagram of a structure of an enhanced BA frame according to this application;
FIG. 22 is a schematic diagram of an application scenario in which a first device actively recovers permission to use a TXOP according to this application;
FIG. 23 is another schematic diagram of an application scenario in which a first device actively recovers permission to use a TXOP according to this application;
FIG. 24 is another schematic diagram of an application scenario in which a first device actively recovers permission to use a TXOP according to this application;
FIG. 25 is a schematic diagram of a structure of an apparatus 1 for recovering permission to use a transmission opportunity according to this application; and
FIG. 26 is a schematic diagram of a structure of a communication apparatus 1000 according to this application.

### DESCRIPTION OF EMBODIMENTS

The following clearly describes the technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

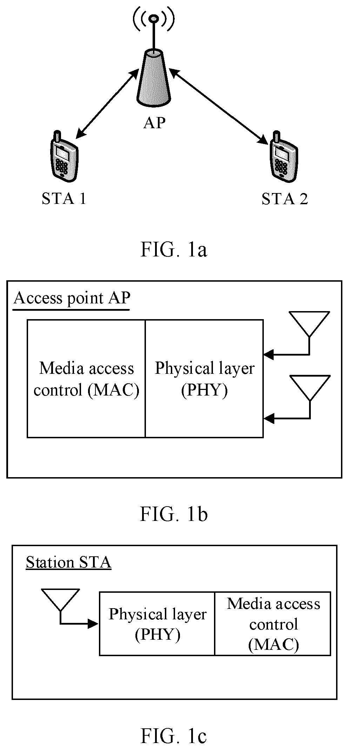

The technical solutions provided in this application may be applied to various communication systems, for example, a system using the IEEE 802.11 standard. For example, the IEEE 802.11 standard includes but is not limited to the 802.11ax standard, the 802.11be standard, or the next-generation 802.11 standard. Scenarios to which the technical solutions of this application are applicable include: communication between an AP and one or more STAs, communication between APs, communication between STAs, and the like. For example, FIG. 1a is a schematic diagram of an architecture of a communication system according to this application. As shown in FIG. 1a, the communication system may include one AP and two STAs (for example, a STA 1 and a STA 2 in FIG. 1a). The AP may communicate with the STA 1, or the AP may further communicate with the STA 2.

An access point (AP) in this application is an apparatus having a wireless communication function, and supports communication based on the Wireless Local Area Network (wireless local area network, WLAN) protocol. The access point has a function of communicating with another device (for example, a station or another access point) in a WLAN network. Certainly, the access point may further have a function of communicating with another device. In a WLAN system, an access point may be referred to as an access point station (access point station, AP STA). The apparatus having the wireless communication function may be an entire device, or may be a chip or a processing system installed in the entire device. The device in which the chip or the processing system is disposed may implement the method and the function in embodiments of this application under control of the chip or the processing system. The AP in embodiments of this application is an apparatus providing a service for the STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

The station (STA) in this application is an apparatus having a wireless communication function, supports communication based on the WLAN protocol, and has a capability of communicating with another station or the access point in the WLAN network. In the WLAN system, a station may be referred to as a non-access point station (non-access point station, non-AP STA). For example, the STA is any user communication device that allows a user to communicate with an AP and further communicate with a WLAN. The apparatus having the wireless communication function may be an entire device, or may be a chip or a processing system installed in the entire device. The device in which the chip or the processing system is disposed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone. Alternatively, the STA may be an internet of things node in the internet of things, an in-vehicle communication apparatus in the internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in the internet of vehicle, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in embodiments of this application, and are merely examples for description herein.

It should be understood that the 802.11 standard focuses on a physical layer (physical layer, PHY) part and a media access control (media access control, MAC) layer part. For example, FIG. 1b is a schematic diagram of a structure of an access point according to an embodiment of this application. The AP may have multiple antennas/radio frequencies, or may have a single antenna/radio frequency. The antenna/radio frequency is used to send/receive a data packet. In an implementation, an antenna or a radio frequency part of the AP may be separated, in other words, remotely disposed from a main body of the AP. In FIG. 1b, the AP may include a physical layer processing circuit and a media access control processing circuit. The physical layer processing circuit may be configured to process a physical layer signal, and the MAC layer processing circuit may be configured to process a MAC layer signal. For another example, FIG. 1c is a schematic diagram of a structure of a station according to an embodiment of this application. FIG. 1c is a schematic diagram of a structure of a STA with a single antenna/radio frequency. In an actual scenario, the STA may alternatively have multiple antennas/radio frequencies, and may be a device with more than two antennas. The antenna/radio frequency is used to send/receive a data packet. In an implementation, an antenna or a radio frequency part of the STA may be separated, in other words, remotely disposed from a main body of the STA. In FIG. 1c, the STA may include a PHY processing circuit and a MAC processing circuit. The physical layer processing circuit may be configured to process a physical layer signal, and the MAC layer processing circuit may be configured to process a MAC layer signal.

To better understand the technical solutions provided in this application, the following briefly describes an application scenario of a method for recovering permission to use a transmission opportunity provided in this embodiment of this application.

The method for recovering the permission to use the transmission opportunity provided in this embodiment of this application may be applied to a point-to-point (point-to-point or peer-to-peer, P2P) communication scenario, an uplink (uplink, UL) transmission scenario, and the like. This is not limited herein. A data transmission format used in the P2P scenario and the UL scenario in this embodiment of this application is an SU PPDU or the like. This is not limited herein.

It should be understood that the trigger frame in the current IEEE 802.11ax standard is designed for a plurality of users to simultaneously send an uplink TB PPDU. Therefore, the current trigger frame needs to indicate information such as a modulation and coding scheme (Modulation and Coding Scheme, MCS), a resource unit (Resource unit, RU), and a transmit power. Because the AP usually has a stronger channel access capability, a next-generation IEEE 802.11be standard needs to support an SU PPDU triggered by the AP. Currently, to implement the SU PPDU triggered by the AP, the AP may send a single-user trigger frame, to allocate a portion of time resources in a TXOP to an associated STA (for ease of description, referred to as a specified STA or a target STA for short below), so that the specified STA communicates with another STA or the AP in an allocated time resource. Communication between the specified STA and another STA may be understood as P2P communication or P2P transmission, and communication between the specified STA and the AP may be understood as UL communication or UL transmission.

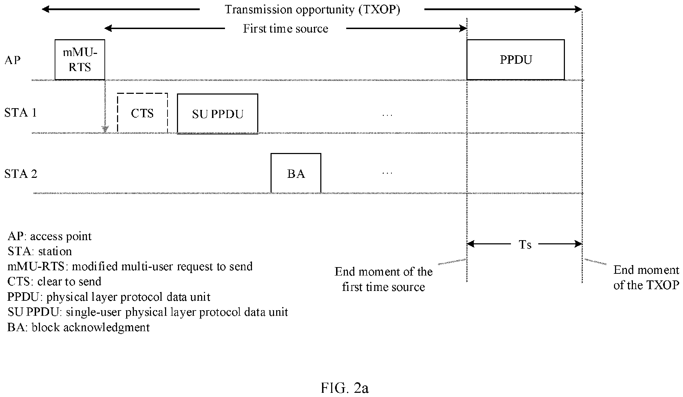

For example, FIG. 2a is a schematic diagram of applying a single-user trigger frame to a P2P scenario. As shown in FIG. 2a, after obtaining a TXOP, an AP may allocate a portion or all of remaining time resources (for example, a first time resource in FIG. 2a) in the TXOP to a specified STA (for example, a STA 1 in FIG. 2a) by using a single-user trigger frame (for example, a modified multi-user request to send (modified multi-user request to send, mMU-RTS) frame in FIG. 2a). In the following embodiments of this application, the first time resource may also be referred to as a single-user service period (single-user service period, SU SP). This is not limited herein. The mMU-RTS frame may carry information such as information about the STA 1, a remaining time resource of the TXOP, and duration of the first time resource allocated to the STA 1. Therefore, in the allocated first time resource, the STA 1 may send a SU PPDU to a STA 2, and the STA 2 may send a block acknowledgment (block acknowledge, BA) frame of the SU PPDU to the STA 1. It is readily understood that, in this embodiment of this application, a start moment of the first time resource is not earlier than a start moment of the TXOP, and an end moment of the first time resource is not later than an end moment of the TXOP. In other words, the start moment of the first time resource is greater than or equal to the start moment of the TXOP, and the end moment of the first time resource is less than or equal to the end moment of the TXOP.

Optionally, the mMU-RTS frame may further carry information such as whether the specified STA needs to reply a clear to send (Clear to Send, CTS) frame. For example, refer to FIG. 2a. After the STA 1 receives the mMU-RTS frame sent by the AP, if the STA 1 determines, by parsing the mMU-RTS frame, that the AP allocates the first time resource to the STA 1 and requires the STA 1 to reply the CTS frame before sending the SU PPDU. The STA 1 may first send the CTS frame in the allocated first time resource, send the SU PPDU to the STA 2, and then receive a BA frame that is of the SU PPDU and that is returned by the STA 2 to the STA 1. It should be understood that, in the P2P scenario, the AP can recover permission to use the TXOP only after the end moment of the first time resource. The AP recovering the permission to use the TXOP may be understood as that the AP may send a PPDU (a PPDU shown in FIG. 2a), allocate the PPDU to another STA, or the like, in a time period (Ts in FIG. 2a) from the end moment of the first time resource to the end moment of the TXOP. This is specifically determined based on an actual application scenario, and is not limited herein.

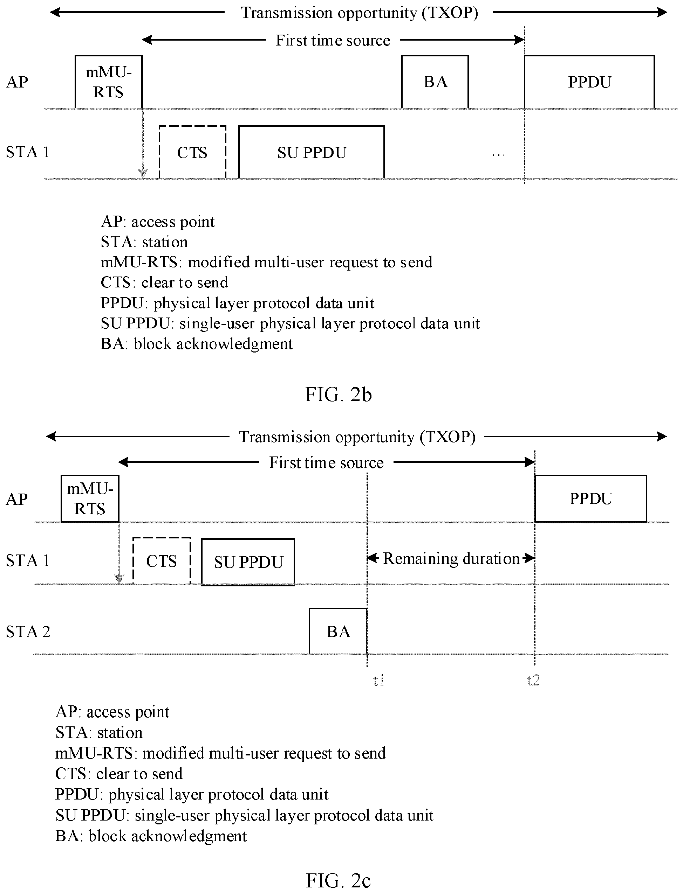

For example, FIG. 2b is a schematic diagram of applying a single-user trigger frame to a UL transmission scenario. As shown in FIG. 2b, after obtaining a TXOP, an AP may allocate a portion or all of remaining time resources (for example, a first time resource in FIG. 2b) in the TXOP to a specified STA (for example, a STA 1 in FIG. 2b) by using a single-user trigger frame (for example, an mMU-RTS frame in FIG. 2b). The mMU-RTS frame may carry information such as information about the STA 1, a remaining time resource of the TXOP, and duration of the first time resource allocated to the STA 1. Therefore, in the allocated first time resource, the STA 1 may send a SU PPDU to the AP, and the AP may send a BA frame of the SU PPDU to the STA 1. Optionally, if the mMU-RTS frame further carries information that the specified STA needs to reply a CTS frame, after receiving the MU-RTS frame, the STA 1 needs to first send one CTS frame, and then send the SU PPDU to the AP. It should be understood that, in the UL transmission scenario, the AP can recover permission to use the TXOP only after an end moment of the first time resource. For example, refer to FIG. 2b. The AP sends the PPDU at the end moment of the first time resource.

It should be understood that, if duration of the first time resource allocated by the AP to the specified STA is long, and the specified STA has completed required transmission after using the first time resource for a period of time, the specified STA does not use the first time resource in a remaining time period. For example, FIG. 2c is a schematic diagram of remaining duration. As shown in FIG. 2c, if duration of a first time resource allocated by an AP to a specified STA (for example, a STA 1 in FIG. 2c) is long, and the STA 1 ends all transmissions at a moment t1 in FIG. 2c, the specified STA does not use the first time resource in a remaining time period (for example, a time period from t1 to t2 in FIG. 2c). Optionally, if duration of a first time resource allocated by an AP to a specified STA is short, the specified STA has not completed required transmission after using the first time resource for a period of time, but remaining duration of the first time resource is insufficient to send a complete SU PPDU, the specified STA does not use the first time resource in the remaining duration. It may be understood that, in any case in which the first time resource has remaining duration, the remaining duration causes a waste of a channel resource, and may allow another STA to obtain permission to use a channel through contention in the remaining duration. However, the AP cannot recover permission to use a TXOP. Therefore, an embodiment of this application provides a method for recovering permission to use a transmission opportunity. In the method, the permission to use the transmission opportunity may be recovered in advance, to improve channel resource utilization and reliability of recovering the permission to use the TXOP.

The following describes in detail the technical solutions provided in this application with reference to more accompanying drawings.

It should be noted that in this application, the first device may be an AP, and the second device may be a non-access point station (namely, a non-AP STA), or may be an access point AP. For ease of description, the following uses the first device and the second device as examples for description in this application.

It may be further understood that both the first device and the second device in this application support the 802.11be protocol (or referred to as the Wi-Fi 7, EHT protocol), and may further support another WLAN communication protocol, for example, the 802.11ax and 802.11ac protocols. It should be understood that the first device and the second device in this application may further support a next-generation protocol of the 802.11be protocol. In other words, the method provided in this application is applicable to the 802.11be protocol and a next-generation protocol of the 802.11be protocol.

An embodiment of this application provides the method for recovering the permission to use the transmission opportunity. The first device may recover/withdraw the permission to use the TXOP by receiving the first frame that is sent by the second device and that indicates to return the TXOP.

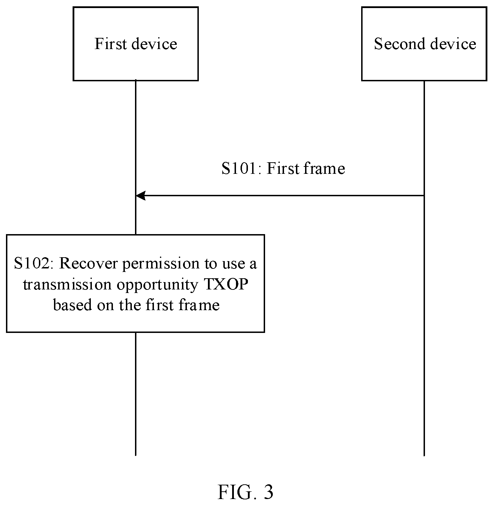

Specifically, FIG. 3 is a schematic flowchart of a method for recovering permission to use a transmission opportunity according to an embodiment of this application. As shown in FIG. 3, the method for recovering the permission to use the transmission opportunity includes the following steps.

S101: A first device receives a first frame from a second device.

In some feasible implementations, the first device may receive the first frame from the second device. The first frame indicates that the second device has stopped using a first time resource. It should be understood that, the first time resource may be allocated by the first device from an obtained TXOP to the second device by using a single-user trigger frame. Specifically, after obtaining the TXOP, the first device may immediately allocate a portion or all of time resources in the TXOP to the second device by using a single-user trigger frame. Alternatively, after obtaining the TXOP, the first device may use a portion of time resources, and then allocate a portion or all of remaining time resources in the TXOP to the second device by using one single-user trigger frame.

Generally, after the first time resource is allocated to the second device, the second device may use the first time resource to perform uplink single-user PPDU transmission or P2P communication. The single-user trigger frame may include a first field and a second field. The first field indicates a remaining time resource of the TXOP. Specifically, the first field may be a duration field, and the second field indicates the first time resource. In other words, the single-user trigger frame may carry information indicating remaining duration of the TXOP, and carry information indicating the first time resource. The single-user trigger frame in this embodiment of this application may be designed based on or by using a multi-user (multi-user, MU) request to send (request to send, RTS) frame (for ease of description, the single-user trigger frame is referred to as a modified or improved MU-RTS frame or an mMU-RTS frame below in this application). Alternatively, the single-user trigger frame may be a new type of trigger frame. This is specifically determined based on an actual application scenario, and is not limited herein.

In some feasible implementations, the first frame that is received by the first device from the second device may carry first indication information. The first indication information indicates that the second device has stopped using the first time resource. In a UL scenario, the first frame may be a quality of service data (quality of service data, QoS Data) frame, or may be a quality of service null data (quality of service null data, QoS Null Data) frame. In a P2P scenario, the first frame may be a QoS null data frame. Both the QoS data frame and the QoS null data frame are frames at a MAC layer (namely, MAC frames). When being encapsulated at a physical layer, both the QoS data frame and the QoS null data frame need to be encapsulated into an SU PPDU for transmission. It may be understood that the QoS null data frame is a special QoS data frame. In other words, the QoS null data frame is a QoS data frame that does not carry service data. The service data may be voice data, video data, file data, or the like, which is not limited herein. It should be understood that both the QoS data frame and the QoS null data frame include an A-control field. A control ID field in the A-control field indicates a control field type of the A-control field. For example, when a control identifier of the A-control field is 6 (namely, a second value in this application), it indicates that the A-control field is specifically a CAS control field.

In some feasible implementations, when the A-control field is the CAS control field (in other words, when the control ID field in the A-control field = 6), a meaning of a value of a reverse grant (reverse grant, RDG)/more PPDU (RDG/More PPDU) subfield in the enhanced CAS control field may indicate that the second device has stopped using the first time resource. In other words, when the A-control field is the CAS control field, the first indication information is the RDG/more PPDU subfield in the CAS control field. The "enhanced" in this application may be understood as that a meaning of a value of the RDG/more PPDU in an original standard protocol (namely, the IEEE 802.11ax standard protocol) is modified/adjusted, so that the RDG/more PPDU subfield may indicate that the second device has stopped using the first time resource. It may be understood that, in this embodiment of this application, the "RDG/more PPDU subfield" may alternatively be briefly described as an "RDG subfield".

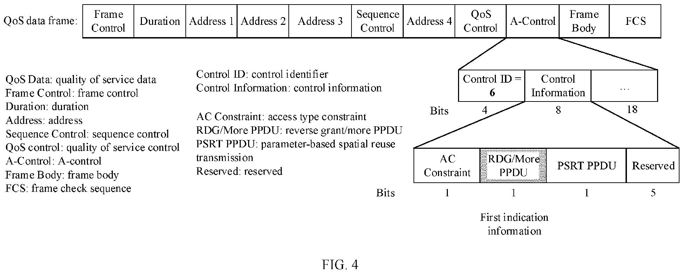

For ease of understanding, FIG. 4 shows a schematic diagram of a structure of a first frame according to an embodiment of this application. The first frame is a QoS data frame in the enhanced CAS control field. As shown in FIG. 4, the QoS data frame may include a frame control (Frame Control) field, a duration (Duration) field, an address 1 (Address 1) field, an address 2 (Address 2) field, an address 3 (Address 3) field, a sequence control (Sequence Control) field, an address 4 (Address 4) field, a quality of service control (QoS Control) field, an A-control (A-Control) field, a frame body (Frame Body) field, and a frame check sequence (frame check sequence, FCS) field. The A-control field includes 30 bits, and may carry one or more control field types. Each control field type includes a 4-bit control ID (Control ID) field and control information (control information) field of a specific length. In other words, one control ID may indicate one control field type, and a field length of a control information field corresponding to each control ID is fixed, but control information fields corresponding to different control IDs may have different lengths. For example, as shown in FIG. 4, when the control identifier = 6, it indicates that the A-control field is the CAS control field. Specifically, in the CAS control field, a field length of the control information field is 8 bits. In the control information field in the CAS control field, a first bit indicates an access type constraint (AC Constraint) subfield, a second bit indicates a reverse grant/more PPDU (RDG/More PPDU) subfield, a third bit indicates a parameter-based spatial reuse transmission (PSRT PPDU) subfield, and a fourth bit to an eighth bit indicate a reserved (Reserved) field.

In the IEEE 802.11ax standard, values and related meanings of the RDG/more PPDU subfield in the CAS control field are shown in the following Table 1.

**Table 1**

| Value | Role of a transmitting STA | Interpretation |
|---|---|---|
| 0 | Not a reverse direction responder | No reverse grant |
| | (Not an RD responder) | (No reverse grant) |
| | RD responder (RD responder) | A PPDU carrying a frame is last transmission by the RD responder |
| | | (The PPDU carrying the frame is the last transmission by the RD responder) |
| 1 | RD initiator | A reverse grant is present |
| | (RD initiator) | (An RDG is present) |
| | RD responder | A PPDU carrying a frame is followed by another PPDU |
| | (RD responder) | |
| | | (The PPDU carrying the frame is followed by another PPDU) |

As shown in Table 1, a first column represents values of the RDG/more PPDU subfield, a second column represents an identity/role (namely, the role of the transmitting STA) of a STA that sends a PPDU including the RDG/more PPDU subfield, and a third column represents a specific meaning of the values. As shown in Table 1, when the role of the transmitting STA is not the RD responder, if the value of the RDG/more PPDU subfield is set to 0, it indicates that there is no reverse grant. When the role of the transmitting STA is the RD responder, if the value of the RDG/more PPDU subfield is set to 0, it indicates that the PPDU carrying the frame is the last transmission by the RD responder. Correspondingly, when the role of the transmitting STA is the RD initiator, if the value of the RDG/more PPDU subfield is set to 1, it indicates that the reverse grant is present. When the role of the transmitting STA is the RD responder, if the value of the RDG/more PPDU subfield is set to 1, it indicates that the PPDU carrying the frame is followed by the another PPDU.

It may be understood that, in this application, to allow the RDG/more PPDU subfield in the enhanced CAS control field to indicate a second device to stop using a first time resource, the meanings of the values of the RDG/more PPDU subfield in the original CAS control field need to be modified/enhanced based on Table 1. Values and related meanings of an RDG/more PPDU subfield in the enhanced CAS control field are shown in the following Table 2.

**Table 2**

| Value | Role of a transmitting STA | Interpretation |
|---|---|---|
| 0 | Neither an RD responder nor a target STA in one SU SP | No reverse grant |
| | | (No reverse grant) |
| | (Neither an RD responder nor a target STA in an SU SP) | |
| | RD responder (RD responder) | A PPDU carrying a frame is last transmission by the RD responder |
| | | (The PPDU carrying the frame is the last transmission by the RD responder) |
| | A target STA in one SU SP | A PPDU carrying a frame is last transmission by the target STA in the SU SP |
| | (target STA in an SU SP) | |
| | | (The PPDU carrying the frame is the last transmission by the target STA in an SU SP) |
| 1 | RD initiator | A reverse grant is present |
| | (RD initiator) | (An RDG is present) |
| | An RD responder or a target STA in one SU SP | A PPDU carrying a frame is followed by another PPDU (The PPDU carrying the frame is followed by another PPDU) |
| | (RD responder or target STA in an SU SP) | |

As shown in Table 2, a first column represents values of the RDG/more PPDU subfield, a second column represents an identity/role (namely, the role of the transmitting STA) of a STA that sends a PPDU including the RDG/more PPDU subfield, and a third column represents a specific meaning of the values. As shown in Table 2, the meanings of the values of the RDG/more PPDU subfield in the enhanced CAS control field are as following: When the role of the transmitting STA is neither the RD responder nor the target STA in the one SU SP, if the value of the RDG/more PPDU subfield is set to 0, it indicates that there is no reverse grant. When the role of the transmitting STA is the RD responder, if the value of the RDG/more PPDU subfield is set to 0, it indicates that the PPDU carrying the frame is the last transmission by the RD responder. When the role of the transmitting STA is the target STA in the one SU SP, if the value of the RDG/more PPDU subfield is set to 0, it indicates that the PPDU carrying the frame is the last transmission by the target STA in the SU SP. Correspondingly, when the role of the transmitting STA is the RD initiator, if the value of the RDG/more PPDU subfield is set to 1, it indicates that the reverse grant is present. When the role of the transmitting STA is the RD responder or the target STA in the one SU SP, if the value of the RDG/more PPDU subfield is set to 1, it indicates that the PPDU carrying the frame is followed by the another PPDU.

It should be understood that "the PPDU carrying the frame is the last transmission by the target STA in the SU SP" may be understood as that the target STA (namely, the second device in this application) stops using the first time resource. A first device is an allocator of the SU SP (namely, the first time resource in this application), to be specific, the first device may allocate the first time resource from an obtained transmission opportunity TXOP to the second device by using a single-user trigger frame. Therefore, the first device knows a specific device that can use the first time resource. It may be understood that when the first device receives the first frame in the first time resource, if the first device determines that a transmitter address of the first frame is the second device, and the first device determines that the second device is the second device to which the first time resource is allocated (in other words, the second device is the specified STA/target STA), the first device parses the first frame. If the first device learns, through parsing, that the value of the RDG subfield in the CAS control field in the first frame is 0, it indicates that the PPDU carrying the frame is the last transmission by the target STA in the SU SP, in other words, the first device may determine that the second device stops using the first time resource.

Optionally, to allow the RDG/more PPDU subfield in the enhanced CAS control field to indicate that the second device has stopped usingthat the second device has stopped using the first time resource, the values and related meanings of the RDG/more PPDU subfield in the enhanced CAS control field are also shown in the following Table 3.

**Table 3**

| Value | Role of a transmitting STA | Interpretation |
|---|---|---|
| 0 | Neither an RD responder nor a target STA in one SU SP | No reverse grant |
| | | (No reverse grant) |
| | (Neither an RD responder nor a target STA in an SU SP) | |
| | RD responder | A PPDU carrying a frame is last transmission by the RD responder |
| | (RD responder) | |
| | | (The PPDU carrying the frame is the last transmission by the RD responder) |
| | A target STA in one SU SP | A PPDU carrying a frame is followed by another PPDU (The PPDU carrying the frame is followed by another PPDU) |
| | (target STA in an SU SP) | |
| 1 | RD initiator | A reverse grant is present |
| | (RD initiator) | (An RDG is present) |
| | RD responder | A PPDU carrying a frame is followed by another PPDU (The PPDU carrying the frame is followed by another PPDU) |
| | (RD responder) | |
| | A target STA in one SU SP | A PPDU carrying a frame is last transmission by the target STA in the SU SP |
| | (target STA in an SU SP) | |
| | | (The PPDU carrying the frame is the last transmission by the target STA in an SU SP) |

As shown in Table 3, a first column represents values of the RDG/more PPDU subfield, a second column represents an identity/role (namely, the role of the transmitting STA) of a STA that sends a PPDU including the RDG/more PPDU subfield, and a third column represents a specific meaning of the values. As shown in Table 3, the meanings of the values of the RDG/more PPDU subfield in the enhanced CAS control field are as following: When the role of the transmitting STA is neither the RD responder nor the target STA in the one SU SP, if the value of the RDG/more PPDU subfield is set to 0, it indicates that there is no reverse grant. When the role of the transmitting STA is the RD responder, if the value of the RDG/more PPDU subfield is set to 0, it indicates that the PPDU carrying the frame is the last transmission by the RD responder. When the role of the transmitting STA is the target STA in the one SU SP, if the value of the RDG/more PPDU subfield is set to 0, it indicates that the PPDU carrying the frame is followed by the another PPDU. Correspondingly, when the role of the transmitting STA is the RD initiator, if the value of the RDG/more PPDU subfield is set to 1, it indicates that the reverse grant is present. When the role of the transmitting STA is the RD responder, if the value of the RDG/more PPDU subfield is set to 1, it indicates that the PPDU carrying the frame is followed by the another PPDU. When the role of the transmitting STA is the target STA in the one SU SP, if the value of the RDG/more PPDU subfield is set to 1, it indicates that the PPDU carrying the frame is the last transmission by the target STA in the SU SP.

It should be understood that "the PPDU carrying the frame is the last transmission by the target STA in the SU SP" means that the target STA (namely, the second device in this application) stops using the first time resource. Specifically, when the second device receives the first frame from the first device, if the second device determines that the first device is the target STA, the second device parses the first frame. If the first device learns, through parsing, that the value of the RDG subfield in the CAS control field in the first frame is 1, it indicates that the PPDU carrying the frame is the last transmission by the target STA in the SU SP, in other words, the first device may determine that the second device stops using the first time resource. Therefore, the first device may recover permission to use the TXOP.

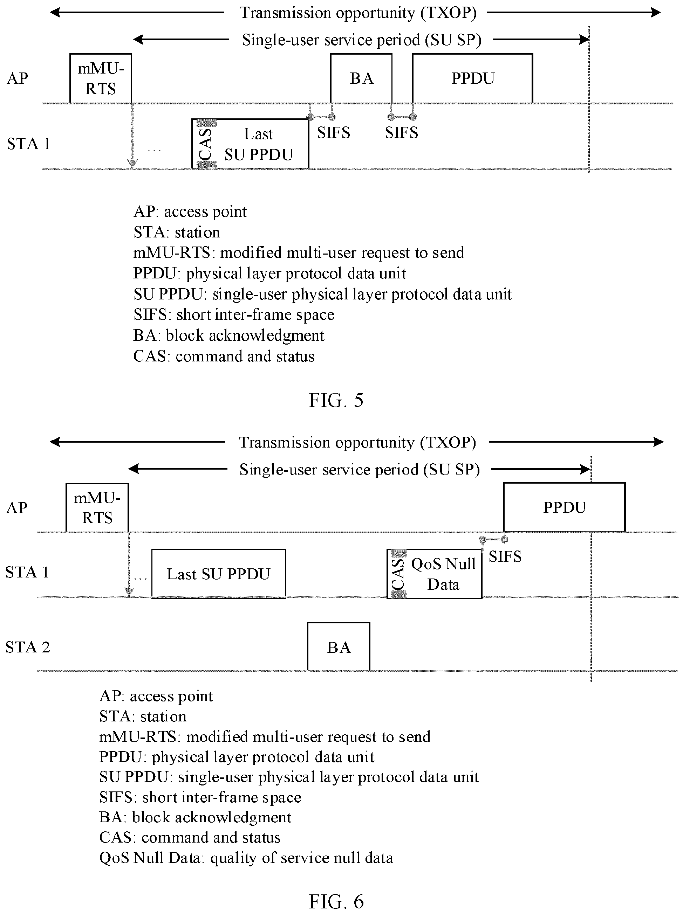

For ease of understanding, FIG. 5 shows a schematic diagram of an application scenario of recovering permission to use a TXOP in a UL scenario according to an embodiment of this application. As shown in FIG. 5, in the UL scenario, for a process from a moment in which a first device (for example, an AP in FIG. 5) sends an mMU-RTS frame to a moment in which a second device (for example, a STA 1 in FIG. 5) sends an SU PPDU to a SU PPDU receiver (for example, the AP in FIG. 5) in a first time resource (for example, an SU SP in FIG. 5), refer to the process described in FIG. 2b. Details are not described herein again. When the STA 1 sends a last SU PPDU to the AP in the SU SP, and an enhanced CAS control field is carried in the SU PPDU, an RDG subfield (namely, an RDG/more PPDU subfield) in the CAS control field of the SU PPDU may indicate, to the AP, that the current SU PPDU is the last SU PPDU transmitted in the SU SP. Therefore, after receiving the SU PPDU carrying the enhanced CAS control field, the AP may reply a BA frame to the STA 1 when or after a short inter-frame space (Short Inter-frame Space, SIFS) elapses, and then recover the permission to use the TXOP when a SIFS elapses. It may be understood that, if the SU PPDU carrying the enhanced CAS control field does not require the AP to reply the BA frame, the AP may recover the permission to use the TXOP (for example, the AP sends the PPDU in FIG. 5) when the SIFS elapses after receiving the SU PPDU carrying the enhanced CAS control field. The last SU PPDU is an SU PPDU encapsulated with a QoS data frame.

For ease of understanding, FIG. 6 shows a schematic diagram of an application scenario of recovering permission to use a TXOP in a P2P scenario according to an embodiment of this application. As shown in FIG. 6, in the P2P scenario, for a process from a moment in which a first device (for example, an AP in FIG. 6) sends an mMU-RTS frame to a moment in which a second device (for example, a STA 1 in FIG. 6) sends an SU PPDU to a SU PPDU receiver (for example, a STA 2 in FIG. 6) in a first time resource (for example, an SU SP in FIG. 6), refer to the process described in FIG. 2a. Details are not described herein again. When the STA 1 sends a last SU PPDU to the STA 2 in the SU SP, if the STA 1 successfully receives a BA frame sent by the STA 2, the STA 1 may send, to the AP, a QoS null data frame carrying an enhanced CAS control field when a SIFS elapses after receiving the BA frame, to indicate, to the AP, that the STA 1 stops using the SU SP. It should be understood that the QoS null data frame is also transmitted in an SU PPDU format. Therefore, after receiving a SU PPDU encapsulated with a QoS null data frame in an enhanced CAS control field, the AP may immediately recover the permission to use the TXOP (for example, the AP sends a PPDU in FIG. 6) when a SIFS elapses.

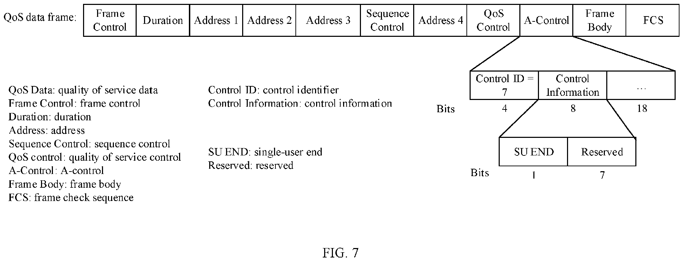

In the claimed implementation, when a first frame is a QoS data frame, a new A-control field is designed to indicate that the second device has stopped using the first time resource. As another feasible, not claimed implementation, the first frame is a Qos null data frame. For example, FIG. 7 is another schematic diagram of a structure of a first frame according to an embodiment of this application. As shown in FIG. 7, the QoS data frame may include a frame control (Frame Control) field, a duration (Duration) field, an address 1 (Address 1) field, an address 2 (Address 2) field, an address 3 (Address 3) field, a sequence control (Sequence Control) field, an address 4 (Address 4) field, a quality of service control (QoS Control) field, an A-control (A-Control) field, a frame body (Frame Body) field, and a frame check sequence (FCS) field. The A-control field includes 30 bits, and may carry one or more control field types. Each control field type includes a 4-bit control ID (Control ID) field and control information (control information) field of a specific length. In other words, one control ID may indicate one control field type, and a field length of a control information field corresponding to each control ID is fixed, but control information fields corresponding to different control IDs may have different lengths. It may be understood that, in this embodiment of this application, when a new A-control field is designed, a length of a control information field in the new A-control field may be designed to be eight bits. In the eight bits included in the control information field, at least one bit may be set to indicate a single-user end (single-user end, SU END) subfield, and another bit different from the single-user end subfield indicate a reserved (Reserved) subfield. As shown in FIG. 7, in the eight bits included in the control information field, a first bit may be used to indicate the single-user end (single-user end, SU END) subfield, and a second bit to an eighth bit may be used to indicate reserved subfields. When a value of the control identifier is a first value (for example, when the control identifier = 7), the first value indicates that the A-control field includes first indication information. It may be understood that the control identifier in the new A-control field may be set as another identifier that is not used in the standard protocol. For example, the control identifier in the new A-control field may be further set to 8, to indicate that the control field is a new type of A-control field. This is specifically determined based on an actual application scenario, and is not limited herein. Optionally, when a new A-control field is designed, a length of a control information field in the new A-control field may be designed to be zero bits. In other words, the new A-control field does not include the control information field. This is not limited herein

It may be understood that, when the new A-control field indicates a second device to stop using a first time resource, the first indication information may be a control ID field in the A-control field (in other words, when the control information field in the new A-control field is designed to be 0 bits, it indicates that the new A-control field does not include the control information field. Therefore, carrying the control ID itself means carrying the first indication information). Alternatively, the first indication information may be the control ID field and the control information field in the A-control field (in other words, when the control information field in the new A-control field is designed to be a non-zero bit, it indicates that the new A-control field includes the control information field. Therefore, the control ID field and the control information field jointly indicate a function of the new control field). To be specific, when a first device receives a first frame from a second device, if the first device parses the first frame and obtains, through parsing, that the value of the control ID field in the A-control field of the first frame is the first value, the second device may determine, based on the first value, to stop using the first time resource. Alternatively, when a first device receives a first frame from a second device, if the first device parses the first frame and obtains, through parsing, that the value of the control ID field in the A-control field of the first frame is the first value, and control information of the A-control field includes information indicating that the first frame is a return frame (that is, a single-user end subfield), the second device may determine, based on the first value and a value of the single-user end subfield in the control information, to stop using the first time resource.

Optionally, in some feasible implementations, the first indication information in the A-control field of an existing type of frame (for example, a QoS data frame or a QoS null data frame) is used to indicate that the second device has stopped usingthat the second device has stopped using the first time resource. In addition, a dedicated control frame may be designed to indicate that a TXOP is recovered (in other words, the second device stops using the first time resource). In this application, the dedicated control frame may be referred to as a single-user end (SU END) frame, a time resource return frame, or the like. This is not limited herein. In other words, the first frame in this application may alternatively be a new type of frame, and the new type of frame indicate the second device to return permission to use the TXOP. Specifically, a frame type field in the first frame indicates that the first frame is a control frame, and a frame subtype field in the first frame indicates that the first frame is a time resource return frame. The time resource return frame indicates that the second device has stopped usingthat the second device has stopped using the first time resource.

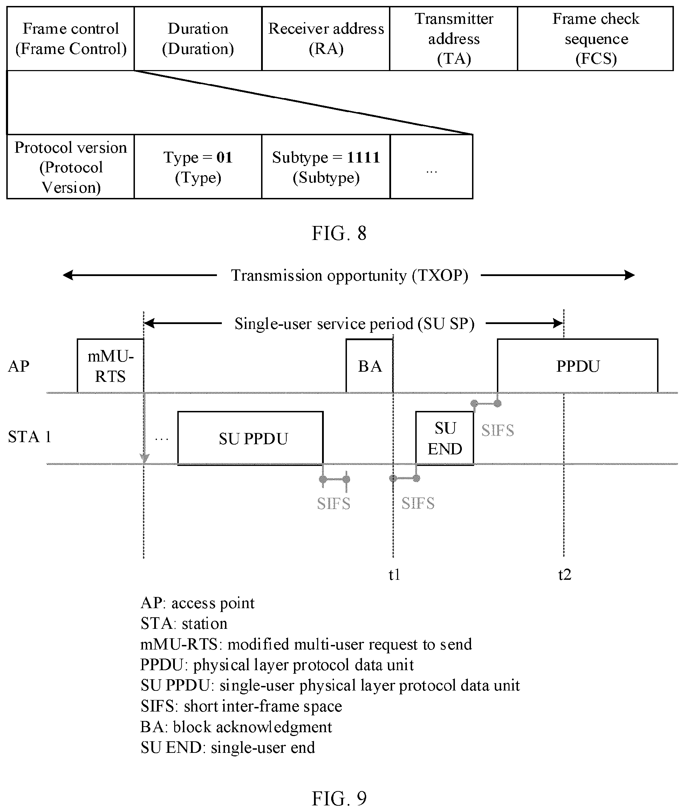

For example, FIG. 8 is another schematic diagram of a structure of a first frame according to an embodiment of this application. As shown in FIG. 8, the first frame (namely, an SU END frame in FIG. 8) may include a frame control (Frame Control) field, a duration (Duration) field, a receiver address (receiver address, RA) field, a transmitter address (transmitter address, TA) field, a frame check Sequence (frame check sequence, FCS) field, and the like. The frame control field includes a protocol version (Protocol Version) field, a frame type (Type) field, and a frame subtype (Subtype) field. When a value of the frame type (Type) field is 01, it indicates that the frame is a control frame, and the frame subtype field indicates that the first frame is a time resource return frame. As shown in FIG. 8, a value of the frame subtype (Subtype) field may be set to 1111, indicating that the frame is an SU END frame or the time resource return frame. It may be understood that a specific value of the frame subtype field is not limited in this application. For example, the value of the frame subtype field may alternatively be 0000, 0001, 0010, or 1111. This is not limited herein.

For ease of understanding, FIG. 9 shows a schematic diagram of another application scenario of recovering permission to use a TXOP in a UL scenario according to an embodiment of this application. As shown in FIG. 9, in the UL scenario, for a process from a moment in which a first device (for example, an AP in FIG. 9) sends an mMU-RTS frame to a moment in which a second device (for example, a STA 1 in FIG. 9) sends an SU PPDU to a SU PPDU receiver (for example, the AP in FIG. 9) in a first time resource (for example, an SU SP in FIG. 9), refer to the process described in FIG. 2b. Details are not described herein again. It is assumed that a moment in which the STA 1 completes sending of a last to-be-sent SU PPDU and completes receiving of a BA frame of the SU PPDU is a moment t1 shown in FIG. 9, an end moment of an SU SP is a moment t2 shown in FIG. 9, and duration of sending a SU END frame by the STA is Tsu_end. Therefore, when the STA 1 determines that t1 + SIFS + Tsu_end ≤ t2, the STA 1 may send the SU END frame to the AP at the moment t1 + SIFS. The AP recovers permission to use a TXOP when a SIFS elapses after receiving the SU END frame. A specific value of Tsu_end may be generally determined based on a modulation and coding scheme, a spatial stream, a bandwidth, and corresponding duration of transmitting the SU END frame in a PPDU format. This is not limited herein.

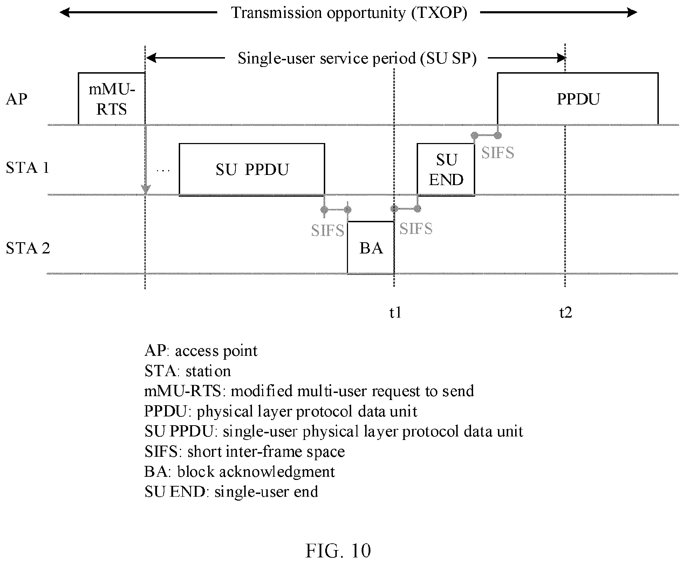

For ease of understanding, FIG. 10 shows a schematic diagram of another application scenario of recovering permission to use a TXOP in a P2P scenario according to an embodiment of this application. As shown in FIG. 10, in the P2P scenario, for a process from a moment in which a first device (for example, an AP in FIG. 10) sends an mMU-RTS frame to a moment in which a second device (for example, a STA 1 in FIG. 10) sends an SU PPDU to a SU PPDU receiver (for example, a STA 2 in FIG. 10) in a first time resource (for example, an SU SP in FIG. 10), refer to the process described in FIG. 2a. Details are not described herein again. It is assumed that an end moment of the SU PPDU used by the STA 1 is t1, an end moment of the SU SP is t2, and duration of sending a SU END frame by the STA is Tsu_end. Therefore, when the STA 1 determines that t1 + SIFS + Tsu_end ≤ t2, the STA 1 may send the SU END frame to the AP at the moment t1 + SIFS. The AP recovers the permission to use the TXOP when a SIFS elapses after receiving the SU END frame. A specific value of Tsu_end may be generally determined based on a modulation and coding scheme, a spatial stream, a bandwidth, and corresponding duration of transmitting the SU END frame in a PPDU format. This is not limited herein.

Optionally, in some feasible implementations, in addition to first indication information, a first frame may further carry second indication information. The second indication information indicates whether the second device further needs a time resource for data transmission. When the first frame is a QoS data frame or a QoS null data frame, and an A-control field in the QoS data frame or the QoS null data frame is a CAS control field, the first indication information is an RDG subfield in the CAS control field, and the second indication information may be at least one bit in a fourth bit to an eighth bit in the CAS control field. When the first frame is the QoS data frame or the QoS null data frame, and the A-control field of the QoS data frame or the QoS null data frame is a new A-control field, the first indication information may be a control identifier of the new A-control field, and the second indication information may be at least one bit in a second bit to an eighth bit in a control information field in the new A-control field. When the first frame is the SU END frame (in other words, the first frame is a dedicated control frame), the first indication information may be a frame subtype field in a frame control field, the second indication information may be at least one reserved field selected from a reserved field in the frame control field, or the like. This is not limited herein.

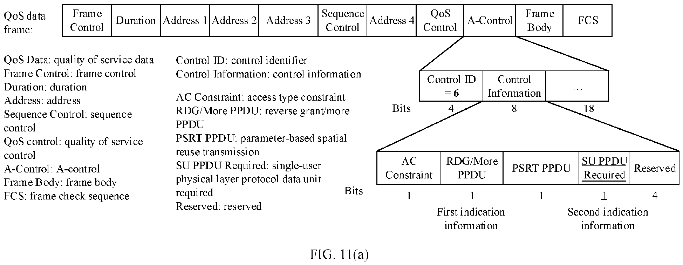

For ease of understanding, the following describes the first indication information and the second indication information by using an example in which the first frame is the QoS data frame and an A-control field in the QoS data frame is the CAS control field. FIG. 11(a) is another schematic diagram of a structure of a first frame according to an embodiment of this application. As shown in FIG. 11(a), when a control identifier = 6, it indicates that an A-control field is a CAS control field. Specifically, in a control information field in the CAS control field, a first bit indicates an access type constraint (AC Constraint) subfield, a second bit indicates a reverse grant/more PPDU (RDG/More PPDU) subfield, a third bit indicates a parameter-based spatial reuse transmission (PSRT PPDU) subfield, and a fourth bit to an eighth bit indicate a reserved (Reserved) field. Therefore, in this embodiment of this application, at least one bit in the fourth bit to the eighth bit indicate whether the second device further needs a time resource used for data transmission. In other words, in this application, the reserved field of at least one bit may be used as a request field for requesting the time resource again. For example, the one-bit reserved field (for example, a fourth bit in FIG. 11(a)) is used as the request field. When the request field is set to 1, it may indicate that the second device further needs an SU SP, and therefore requests the AP to continue to allocate a time resource to the second device subsequently. When the request field is set to 0, it indicates that the second device no longer needs the SU SP. Optionally, it may be further specified that when the request field is set to 0, it indicates that the second device further needs the SU SP, and therefore requests the AP to continue to allocate the time resource to the second device subsequently. When the request field is set to 1, it indicates that the second device no longer needs the SU SP. This is specifically determined based on an actual application scenario, and is not limited herein. It should be understood that, when the one-bit reserved field is used as the request field, the request field may alternatively be any one bit of the fourth bit to the eighth bit in the CAS control field. This is specifically determined based on an actual application scenario, and is not limited herein.

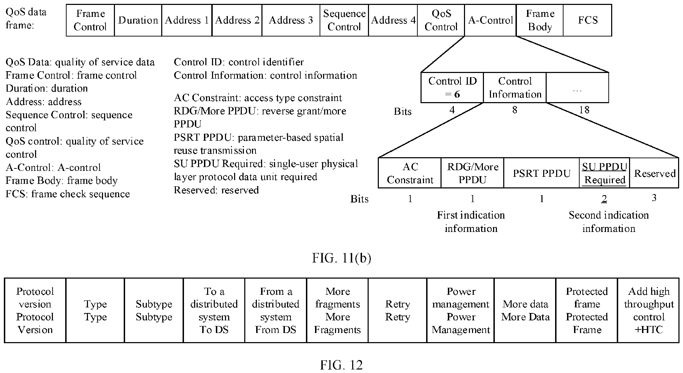

For another example, FIG. 11(b) is another schematic diagram of a structure of a first frame according to an embodiment of this application. As shown in FIG. 11(b), when an A-control field is a CAS control field, in a control information field in the CAS control field, a first bit indicates an access type constraint (AC Constraint) subfield, a second bit indicates a reverse grant/more PPDU (RDG/More PPDU) subfield, a third bit indicates a parameter-based spatial reuse transmission (PSRT PPDU) subfield, and a fourth bit to an eighth bit indicate a reserved (Reserved) field. If a two-bit reserved field (for example, a fourth bit and a fifth bit in FIG. 11(b)) is used as a request field, when a value of the request field is 00 (in other words, a value of the fourth bit is 0, and a value of the fifth bit is 0), it may indicate that a STA does not need an SU SP (in other words, the STA does not need an SU SP for UL transmission, and does not need an SU SP for P2P transmission). When a value of the request field is 01 (in other words, a value of the fourth bit is 0, and a value of the fifth bit is 1), the request field may indicate an SU SP for UL transmission by the STA (in other words, the STA needs the SU SP for UL transmission and does not need an SU SP for P2P transmission). When a value of the request field is 10 (in other words, a value of the fourth bit is 1, and a value of the fifth bit is 0), the request field may indicate that the STA needs an SU SP for P2P transmission (in other words the STA needs the SU SP for P2P transmission and does not need an SU SP for UL transmission). When a value of the request field is 11 (in other words, a value of the fourth bit is 1, and a value of the fifth bit is 1), the request field may indicate that the STA needs an SU SP for both UL transmission and P2P transmission (in other words, the STA needs the SU SP for both UL transmission and P2P transmission). It may be understood that specific meanings indicated by different values may be determined based on an actual application scenario. This is not limited herein.

Optionally, when the two-bit reserved field is used as the request field, the request field may alternatively be any two contiguous bits (for example, the fourth bit and the fifth bit, or the fifth bit and the sixth bit, or the sixth bit and the seventh bit, or the seventh bit and the eighth bit) in the fourth bit to the eighth bit in the CAS control field. Optionally, when the two-bit reserved field is used as the request field, the request field may alternatively be any two noncontiguous bits of the fourth bit to the eighth bit in the CAS control field. The any two noncontiguous bits may be two bits separated by one bit, for example, may be the fourth bit and the sixth bit, or the fifth bit and the seventh bit, or the sixth bit and the eighth bit. Optionally, the any two noncontiguous bits may alternatively be two bits separated by two bits, for example, may be the fourth bit and the seventh bit, or may be the fifth bit and the eighth bit. Optionally, the any two noncontiguous bits may alternatively be two bits separated by three bits, for example, the fourth bit and the eighth bit. This is not limited herein.

Optionally, in some feasible implementations, regardless of a P2P scenario or a UL scenario, the 802.11 standard protocol specifies that a second device can transmit a SU PPDU carrying service data only in a duration range of a first time resource. Herein, the transmitting a SU PPDU carrying service data only in a duration range of a first time resource includes: completing sending of the SU PPDU before an end moment of the first time resource, and transmitting a BA frame that requires a reply. Therefore, for the UL scenario, when the first frame is a QoS data frame (the QoS data frame is a QoS data frame carrying an enhanced CAS control field, or a QoS data frame carrying a new A-control field), the QoS data frame still needs to complete transmission before the end moment of the first time resource. When the first frame is a frame that does not carry the service data (in other words, the first frame is not the QoS data frame), it may be specified that the first frame may be allowed to cross the end moment of the first time resource, in other words, cross-boundary transmission is allowed. For example, in the P2P scenario or the UL scenario, when the first frame is an SU END frame, transmission of the SU END frame may be allowed to exceed the end moment of the first time resource. In other words, an end moment of the SU END frame is allowed to be later than the end moment of the first time resource, and a start moment of the SU END frame is earlier than the end moment of the first time resource. For another example, in the P2P scenario, when the first frame is the QoS null data frame, transmission of the QoS null data frame may also be allowed to exceed the end moment of the first time resource. In other words, an ending moment of the QoS null data frame is allowed to be later than the end moment of the first time resource, and a start moment of the QoS null data frame is earlier than the end moment of the first time resource.

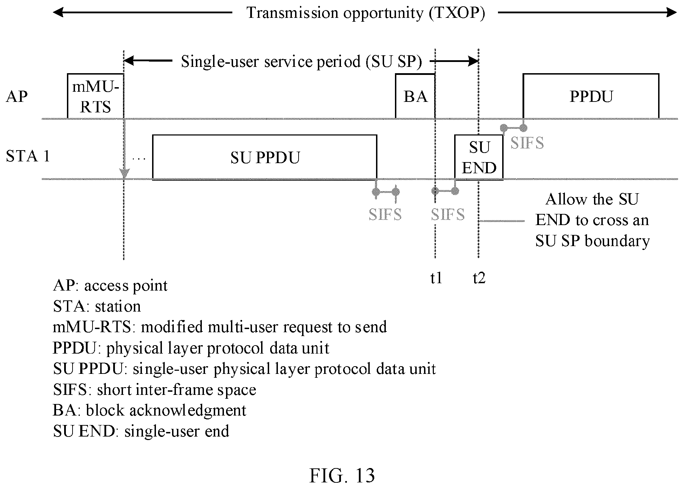

For ease of understanding, FIG. 13 shows a schematic diagram of a scenario in which cross-boundary transmission of an SU END frame is allowed in a UL scenario according to an embodiment of this application. As shown in FIG. 13, in the UL scenario, for a process from a moment in which a first device (for example, an AP in FIG. 13) sends an mMU-RTS frame to a moment in which a second device (for example, a STA 1 in FIG. 13) sends an SU PPDU to a SU PPDU receiver (for example, the AP in FIG. 13) in a first time resource (for example, an SU SP in FIG. 13), refer to the process described in FIG. 2b. Details are not described herein again. After the STA 1 completes sending of a last SU PPDU in the first time resource and successfully receives a BA frame sent by the AP, if an end moment of the first time resource is not exceeded when a SIFS elapses after the STA 1 receives the BA frame, the STA 1 immediately sends one SU END frame to the AP to indicate to the AP that the STA 1 stops using the first time resource. A first device (for example, an AP in FIG. 13) immediately recovers permission to use a TXOP when a SIFS elapses after receiving the SU END frame.

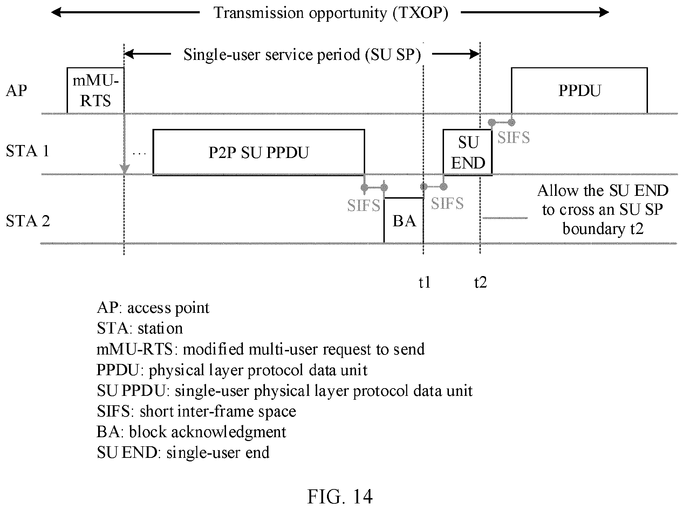

Optionally, FIG. 14 is a schematic diagram of a scenario in which cross-boundary transmission of an SU END frame is allowed in a P2P scenario according to an embodiment of this application. As shown in FIG. 14, in the P2P scenario, for a process from a moment in which a first device (for example, an AP in FIG. 14) sends an mMU - RTS frame to a moment in which a second device (for example, a STA 1 in FIG. 14) sends an SU PPDU to a SU PPDU receiver (for example, a STA 2 in FIG. 14) in a first time resource (for example, an SU SP in FIG. 14), refer to the process described in FIG. 2a. Details are not described herein again. After the STA 1 completes sending of a last SU PPDU in the first time resource and successfully receives a BA frame sent by the STA 2, if an end moment of the first time resource is not exceeded when a SIFS elapses after the STA 1 receives the BA frame, the STA 1 immediately sends one SU END frame to the AP to indicate to the AP that the STA 1 stops using the first time resource. The AP immediately recovers permission to use a TXOP when a SIFS elapses after receiving the SU END frame.

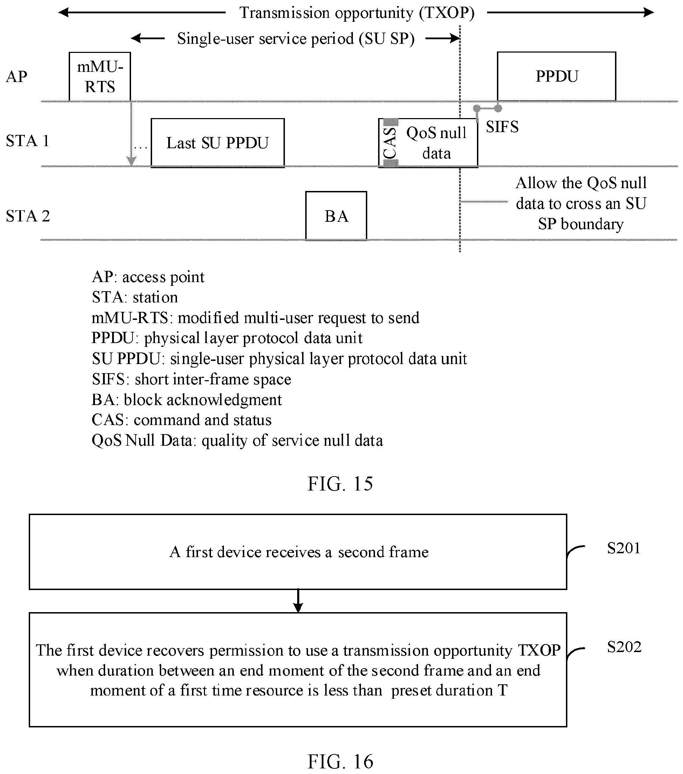

Optionally, FIG. 15 shows a schematic diagram of another application scenario of recovering permission to use a TXOP in a P2P scenario according to an embodiment of this application. As shown in FIG. 15, in the P2P scenario, for a process from a moment in which a first device (for example, an AP in FIG. 15) sends an mMU-RTS frame to a moment in which a second device (for example, a STA 1 in FIG. 15) sends an SU PPDU to a SU PPDU receiver (for example, a STA 2 in FIG. 15) in a first time resource (for example, an SU SP in FIG. 15), refer to the process described in FIG. 2a. Details are not described herein again. After the STA 1 completes sending of a last SU PPDU in the SU SP and successfully receives a BA frame sent by the STA 2, if an end moment of the SU SP is not exceeded when a SIFS elapses after the STA 1 receives the BA frame, the STA 1 immediately sends one QoS null data frame to the AP to indicate an end of using the SU SP to the AP. The AP immediately recovers permission to use a TXOP when a SIFS elapses after receiving the QoS null data frame.

In this embodiment of this application, a first frame may be a frame carrying a frame control field, and the second device indicates, by using a more data subfield in the frame control, whether to stop using a first time resource. When the more data subfield is set to 1, it indicates to stop using the first time resource, and when the more data subfield is set to 0, it indicates not to stop using the first time resource. In another example, when the more data subfield is set to 0, it indicates to stop using the first time resource, and when the more data subfield is set to 1, it indicates not to stop using the first time resource.

A structure of the frame control field is shown in FIG. 12. There is the more data subfield currently in a frame sent by the AP to a station supporting power saving, and indicates whether the AP buffers more data for a target STA. If the more data subfield is set to 1, it indicates that the more buffered data exists. If the more data subfield is set to 0, it indicates that no more buffered data exists. Similarly, a TDLS station may also use the more data subfield to indicate whether the TDLS station has more buffered data for a TDLS receiving station in a power saving mode. In a conventional technology, the more data subfield is not used in a scenario in which a non-AP STA sends to an associated AP, and the more data subfield is set to 0.

Specifically, in a possible implementation, the first device is the AP, and the second device may include two cases: One is a non-AP STA associated with the first device, and the other is an overlapping basic service set (Overlapping Basic Service Set, OBSS) AP.

When the second device is the non-AP STA associated with the first device, in the technical solution in this embodiment of this application, the more data subfield is used in a frame sent by the non-AP STA to the associated AP, to indicate whether to stop using the first time resource. In this case, when the more data subfield is set to 0, it does not indicate that the non-AP STA does not use the more data subfield, but indicates not to stop using the first time resource. When the non-AP STA sends to a station different from the associated AP, a value of the more data subfield does not indicate information indicating whether to stop using the first time resource. In this scenario, a specific meaning of the value of the more data subfield may comply with a function of indicating whether there is buffered data in an existing protocol, or may be redefined. This is not limited in this application. The station different from the associated AP may be the non-AP STA, or may be the AP. This is not limited herein in this application.

When the second device is an OBSS AP, in the technical solution in this embodiment of this application, the more data subfield is used in a frame sent by the OBSS AP to the first device, to indicate whether to stop using the first time resource. For example, when the more data subfield is set to 0, it indicates not to stop using the first time resource. When the OBSS AP sends to a station different from the first device, a value of the more data subfield does not indicate information indicating whether to stop using the first time resource. In this scenario, a specific meaning of the value of the more data subfield may comply with a function of indicating whether there is buffered data in an existing protocol, or may be redefined. This is not limited in this application. The station different from the first device may be the non-AP STA, or may be the AP. This is not limited herein in this application.

It should be noted that, because the more data subfield may indicate whether to stop using the first time resource, and such function is different from an original function of more data subfield, the more data subfield may have another name, for example, more data/transmission opportunity sharing termination (More Data/TXOP Sharing Termination). It should be understood that whether the name is modified does not affect use of a function of the more data subfield.

In this technical solution, the existing more data subfield indicates whether to stop using the first time resource, so that an existing field in the more data subfield can be used to a maximum extent, and no new field is additionally added. This can reduce indication overheads and help product implementation.

S102: The first device recovers the permission to use the TXOP based on the first frame.

In some feasible implementations, when receiving the first frame from the second device, the first device may obtain, by parsing the first frame, first indication information carried in the first frame, and further recover the permission to use the TXOP based on the first indication information. Optionally, when the first device receives the first frame from the second device, if the first device may obtain, by parsing the first frame, first indication information and second indication information that are carried in the first frame, the first device may recover the permission to use the TXOP based on the first indication information, and continue to allocate a new time resource to the second device from remaining duration of the TXOP based on the second indication information.

In this embodiment of this application, the first frame indicates that the second device has stopped using an allocated time resource (the first time resource), so that the first device withdraws or recovers the permission to use the TXOP in advance based on the indication of the first frame. This can improve channel resource utilization and reliability of recovering the permission to use the TXOP.

In addition, an embodiment of this application further provides a method for recovering the permission to use the transmission opportunity. This embodiment of this application mainly describes that when sending and receiving of any frame are not allowed to exceed an end moment of a first time resource in a standard protocol, the first device may recover or withdraw the permission to use the TXOP by setting preset duration T (namely, time threshold T).

Specifically, FIG. 16 is another schematic flowchart of a method for recovering permission to use a transmission opportunity according to an embodiment of this application. As shown in FIG. 16, the method for recovering the permission to use the transmission opportunity includes the following steps.

S201: A first device receives a second frame.

In some feasible implementations, when receiving the second frame at any moment in a first time resource, the first device may further determine, based on a value relationship between preset duration T and duration between an end moment of the second frame and an end moment of the first time resource, whether to recover the permission to use the TXOP in advance. In other words, the first device needs to determine in real time whether the received second frame meets a condition for recovering the permission to use the TXOP. The second frame may be a frame whose destination address (also referred to as a receiver address) is an address of a second device, or the second frame may be a frame whose transmitter address is the address of the second device and that does not solicit an acknowledgment frame.

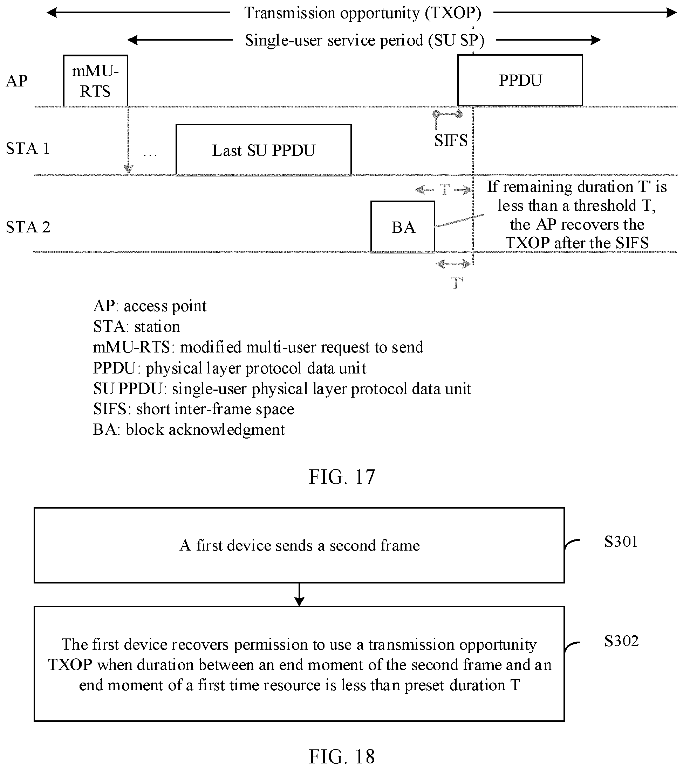

For example, in a P2P scenario, the second frame that is received by the first device and whose destination address is the address of the second device may be a BA frame sent by an SU PPDU receiver (namely, another station STA) to the second device. As shown in FIG. 17, a STA 1 sends an SU PPDU to a STA 2, and the STA 2 replies to the STA 1 with the BA frame. In other words, a destination address of the BA frame is the STA 1 (correspondingly understood as the second device in this embodiment of this application), and the BA frame may also be correspondingly understood as the second frame in this embodiment of this application. In a WLAN system, because a communication manner between devices is broadcast, the first device (for example, an AP in FIG. 17) may receive the BA frame sent by the SU PPDU receiver (for example, the STA 2 in FIG. 17) to the second device. Optionally, in the P2P scenario, the second frame that is received by the first device and whose transmitter address is the address of the second device may be an SU PPDU that is sent by the second device to the SU PPDU receiver and that does not solicit the BA frame. Alternatively, the second frame may be a management frame, or the like sent by the second device. This is specifically determined based on an actual application scenario, and is not limited herein.

For example, in a UL scenario, the first device receives the second frame whose transmitter address is the address of the second device, and the second frame does not solicit a response frame. For example, the second frame may be an SU PPDU that is sent by the second device to the first device and that does not solicit the BA frame. Alternatively, the second frame may be a management frame, or the like sent by the second device. This is not limited herein. Optionally, in the UL scenario, because the first device is a receiver of the SU PPDU, the first device may further determine, by using duration between an end moment of a BA frame for sending the SU PPDU and an end moment of the first time resource, whether to withdraw the permission to use the TXOP.

S202: The first device recovers the permission to use the TXOP when the duration between the end moment of the second frame and the end moment of the first time resource is less than the preset duration T.

In some feasible implementations, after the first device receives the second frame, if the first device determines that the duration between the end moment of the second frame and the end moment of the first time resource is less than the preset duration T, the first device recovers the permission to use the TXOP. On the contrary, if the first device determines that the duration between the end moment of the second frame and the end moment of the first time resource is greater than the preset duration T, the first device does not recover the permission to use the TXOP.

Specifically, in the P2P scenario, when the first device receives one acknowledgment frame at any moment in the first time resource, if the first device determines that a destination address of the acknowledgment frame is an address of a specified STA of the first time resource (namely, the address of the second device), the first device may determine whether duration between an end moment of the acknowledgment frame and the end moment of the first time resource is less than T. If the duration is less than T, the first device immediately recovers the permission to use the TXOP after a SIFS. On the contrary, if the duration is greater than T, the first device does not recover the permission to use the TXOP. Alternatively, when the first device receives one frame that does not solicit the response frame at any moment in the first time resource, if a transmitter address of the frame that does not solicit the response frame is an address of a specified STA of the first time resource (namely, the address of the second device), the first device determines whether duration between an end moment of the frame and the end moment of the first time resource is less than T. If the duration is less than T, the first device may immediately recover the permission to use the TXOP after a SIFS. On the contrary, if the duration is greater than T, the first device does not recover the permission to use the TXOP.

Specifically, in the UL scenario, when the first device receives one frame that does not solicit the response frame at any moment in the first time resource, if a transmitter address of the frame that does not solicit the response frame is an address of a specified STA of the first time resource (namely, the address of the second device), the first device determines whether duration between an end moment of the frame and the end moment of the first time resource is less than T. If the duration is less than T, the first device may immediately recover the permission to use the TXOP after a SIFS. On the contrary, if the duration is greater than T, the first device does not recover the permission to use the TXOP.

For ease of understanding, FIG. 17 shows a schematic diagram of a scenario of recovering permission to use a TXOP based on preset duration T in a P2P scenario according to this application. As shown in FIG. 17, in the P2P scenario, for a process from a moment in which a first device (for example, an AP in FIG. 17) sends an mMU-RTS frame to a moment in which a second device (for example, a STA 1 in FIG. 17) sends an SU PPDU to a SU PPDU receiver (for example, a STA 2 in FIG. 17) in a first time resource (for example, an SU SP in FIG. 17), refer to the process described in FIG. 2a. Details are not described herein again. When the AP receives one BA frame at any moment in the first time resource, and a destination address of the BA frame is an address of the STA 1, if the AP determines that duration (for example, T' in FIG. 17) between an end moment of the BA frame and an end moment of the SU SP is less than preset duration T, the AP may immediately recover the permission to use the TXOP after a SIFS. On the contrary, if T' is greater than T, the AP does not recover the permission to use the TXOP. Correspondingly, if the STA 1 receives a BA frame at any moment in the first time resource, and determines that the duration T' between the end moment of the BA frame and the end moment of the SU SP is less than T, the STA 1 considers by default that the AP recovers the permission to use the TXOP, in other words, the STA is no longer allowed to send the SU PPDU in remaining duration of the SU SP. On the contrary, if the STA 1 determines that the duration T' is greater than T, the STA may continue to use the SU SP.

Optionally, in some feasible implementations, after the first device determines that the duration between the end moment of the second frame and the end moment of the first time resource is equal to the preset duration T, the first device may select to recover the permission to use the TXOP. Alternatively, the first device may select to not recover the permission to use the TXOP. This is specifically determined based on an actual application scenario, and is not limited herein.

Correspondingly, when duration between an end moment in which the second device receives a second frame and an end moment of the first time resource is less than the preset duration T, or duration between an end moment in which the second device sends a second frame and an end moment of the first time resource is less than the preset duration T, the second device no longer sends a PPDU. On the contrary, when the duration between the end moment in which the second device receives the second frame and the end moment of the first time resource is greater than the preset duration T, or the duration between the end moment in which the second device sends the second frame and the end moment of the first time resource is greater than the preset duration T, the second device may continue to use the first time resource.

Specifically, in a UL scenario or in the P2P scenario, when the second device receives one acknowledgment frame at any moment in the first time resource, the second device may determine whether duration between an end moment of the acknowledgment frame and the end moment of the first time resource is less than T. If the duration is less than T, the second device considers by default that the first device recovers the permission to use the TXOP, in other words, the second device is no longer allowed to send the SU PPDU in remaining duration of the first time resource. On the contrary, if the duration is greater than T, the STA may continue to use the SU SP. Alternatively, when the second device sends one frame that does not solicit a response frame at any moment in the first time resource, the second device determines whether duration between an end moment of the response frame and the end moment of the first time resource is less than T. If the duration is less than T, the second device considers by default that the first device recovers the permission to use the TXOP, in other words, the second device no longer sends the SU PPDU in remaining duration of the first time resource. On the contrary, if the duration is greater than T, the second device may continue to use the first time resource.

It may be understood that, when the duration between the end moment in which the second device receives the second frame and the end moment of the first time resource is equal to the preset duration T, or the duration between the end moment in which the second device sends the second frame and the end moment of the first time resource is equal to the preset duration T, whether the second device selects to continue to use the first time resource should be consistent with whether the first device selects to recover the permission to use the TXOP. For example, if it is specified that the first device selects to recover the permission to use the TXOP when the first device determines that the duration between the end moment of the second frame and the end moment of the first time resource is equal to the preset duration T, the second device needs to select not to send the PPDU when the duration between the end moment of the second frame and the end moment of the first time resource is equal to the preset duration T. Correspondingly, if it is specified that the first device selects not to recover the permission to use the TXOP when the first device determines that the duration between the end moment of the second frame and the end moment of the first time resource is equal to the preset duration T, it may be specified that the second device selects to continue to use the first time resource when the duration between the end moment of the second frame and the end moment of the first time resource is equal to the preset duration T.

Optionally, in some feasible implementations, when the second frame is a last SU PPDU sent by the second device when the second device uses the first time resource, or when the second frame is a BA frame of a last SU PPDU sent by the second device when the second device uses the first time resource, if the second device determines that the duration between the end moment of the second frame and the end moment of the first time resource is greater than the preset duration T, to prevent a waste of a channel resource, the second device may further send a first frame to the first device, to indicate that the second device has stopped using the first time resource. Correspondingly, the first device receives the first frame from the second device, and parses information about the first frame, so that the first device may recover the permission to use the TXOP based on the first frame. In this embodiment of this application, for a solution in which the second device sends the first frame to indicate that the second device has stopped using the first time resource, refer to the process described in Embodiment 1. Details are not described herein again.

In this embodiment of this application, in the P2P and UL scenarios, the first device may determine a value relationship between a time threshold (namely, the preset duration T in this application) and duration T' between an end moment at which the second frame is received at any moment and the end moment of the first time resource, to determine whether to recover or withdraw the permission of the first device to use the TXOP. According to the solution in this embodiment of this application, when T' is less than T, the permission to use the TXOP is recovered, and the permission to use the TXOP can also be recovered in advance. This can improve channel resource utilization and reliability of recovering the permission to use the TXOP.

Further, in the UL scenario, the first device may alternatively send the second frame, and determine, based on a value relationship between the time threshold (namely, the preset duration T in this application) and the duration T' between the end moment of the second frame and the end moment of the first time resource, whether to recover or withdraw the permission of the first device to use the TXOP.

Specifically, FIG. 18 is another schematic flowchart of a method for recovering permission to use a transmission opportunity according to an embodiment of this application. As shown in FIG. 18, the method for recovering the permission to use the transmission opportunity includes the following steps.

S301: A first device sends a second frame.

In some feasible implementations, in a UL scenario, the first device may alternatively send the second frame to a second device, and determine, based on a value relationship between preset duration T and duration between an end moment of the second frame and an end moment of a first time resource, whether to recover the permission to use the TXOP. Generally, the second frame sent by the first device in the UL scenario is a BA frame returned by the first device to the second device based on an SU PPDU received from the second device. Further, in the UL scenario, the second device receives the BA frame sent by the first device, and determine, based on the value relationship between the preset duration T and the duration between the end moment of the second frame and the end moment of the first time resource, whether to continue to use the first time resource.

S302: The first device recovers the permission to use the transmission opportunity TXOP when the duration between the end moment of the second frame and the end moment of the first time resource is less than the preset duration T.

In some feasible implementations, the first device recovers the permission to use the transmission opportunity TXOP when the duration between the end moment of the second frame and the end moment of the first time resource is less than the preset duration T. The first time resource is allocated by the first device from the obtained TXOP to the second device. On the contrary, when the second device determines that the duration between the end moment of the second frame and the end moment of the first time resource is less than the preset duration T, the second device considers by default that the first device recovers use of the TXOP. In other words, the second device is no longer allowed to send an SU PPDU in remaining duration of an SU SP.

Optionally, in some feasible implementations, when second device determines that the duration between the end moment of the second frame and the end moment of the first time resource is greater than T, to prevent a waste, the second device may send a first frame to the first device, to indicate that the second device has stopped using the first time resource. Correspondingly, the first device receives the first frame from the second device, and parses the first frame, so that the first device may recover the permission to use the TXOP based on the first frame. In this embodiment of this application, for a solution in which the second device sends the first frame to indicate that the second device has stopped using the first time resource, refer to the process described in Embodiment 1. Details are not described herein again.

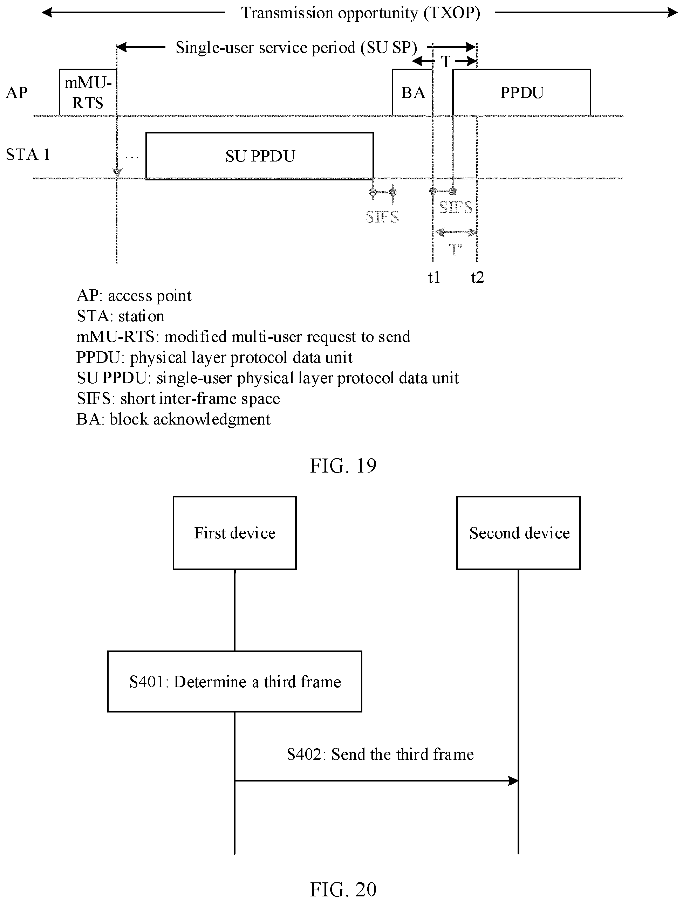

For ease of understanding, FIG. 19 shows a schematic diagram of a scenario of recovering permission to use a TXOP based on preset duration T in a UL scenario according to this application. As shown in FIG. 19, in the UL scenario, for a process from a moment in which a first device (for example, an AP in FIG. 19) sends an mMU-RTS frame to a moment in which a second device (for example, a STA 1 in FIG. 19) sends an SU PPDU to a SU PPDU receiver (for example, the AP in FIG. 19) in a first time resource (for example, an SU SP in FIG. 19), refer to the process described in FIG. 2a. Details are not described herein again. When the AP sends one BA frame to the STA 1 at any moment in the first time resource, if the AP determines that duration (for example, T' in FIG. 19) between an end moment of the BA frame and an end moment of the SU SP is less than preset duration T, the AP may immediately recover the permission to use the TXOP after a SIFS. On the contrary, if T' is greater than T, the AP does not recover the permission to use the TXOP. Correspondingly, if the STA 1 receives a BA frame at any moment in the first time resource, and determines that the duration T' between the end moment of the BA frame and the end moment of the SU SP is less than T, the STA 1 considers by default that the AP recovers the permission to use the TXOP, in other words, the STA1 is no longer allowed to send the SU PPDU in remaining duration of the SU SP. On the contrary, if the STA 1 determines that the duration T' is greater than T, the STA may continue to use the SU SP.

In this embodiment of this application, in the UL scenario, the first device may send a second frame, and determine, based on a value relationship between the time threshold (namely, the preset duration T in this application) and the duration T' between the end moment of the second frame and the end moment of the first time resource, whether to recover/withdraw the permission of the first device to use the TXOP. According to the solution in this embodiment of this application, when T' is less than T, the permission to use the TXOP is recovered, and the permission to use the TXOP can also be recovered in advance. This can improve channel resource utilization and reliability of recovering the permission to use the TXOP.

In addition, in another embodiment of this application, when the AP needs to withdraw the permission to use the TXOP for a reason (for example, an urgent service to be immediately transmitted arrives), the AP may actively recover/withdraw the permission of the AP to use the TXOP by sending an active recovery frame (namely, a third frame in this application). The following uses an example in which this embodiment is applied to the UL scenario for description. It may be understood that this embodiment may also be applied to another scenario. This is not limited in this application.

Specifically, FIG. 20 is another schematic flowchart of a method for recovering permission to use a transmission opportunity according to an embodiment of this application. As shown in FIG. 20, the method for recovering the permission to use the transmission opportunity includes the following steps.

S401: A first device determines a third frame.

In some feasible implementations, if an AP needs to withdraw the permission to use the TXOP for a reason (for example, an urgent service to be immediately transmitted arrives), the AP may send the third frame to indicate to a second device that the first device immediately withdraws or is to withdraw the permission to use the TXOP. Therefore, after receiving the third frame, the second device no longer transmits a SU PPDU in remaining duration of a first time resource.

The third frame may be an enhanced BA frame. In other words, in this application, a frame structure of the BA frame fed back by the first device to the second device may be modified, so that the enhanced BA frame may indicate that the BA frame is a response frame of the first device based on the SU PPDU received from the second device, and may also indicate the first device to actively recover the permission to use the TXOP. It may be understood that in this application, a BA control (BA Control) field may be modified, so that the BA control field indicates the first device to actively recover the permission to use the TXOP. Specifically, at least one bit included in a reserved field in the BA control field may be set as a TXOP recovery indication (TXOP Recovery Indication) field. For example, assuming that the one bit included in the reserved field in the BA control field is set as the TXOP recovery indication field, it may be specified that when the TXOP recovery indication field is set to 1, it indicates that the first device immediately recovers the permission to use the TXOP; when the field is set to 0, it indicates that the first device does not recover the permission to use the TXOP. Alternatively, it may be specified that when the TXOP recovery indication field is set to 0, it indicates that the first device immediately recovers the permission to use the TXOP; when the field is set to 1, it indicates that the first device does not recover the permission to use the TXOP. This is not limited herein.

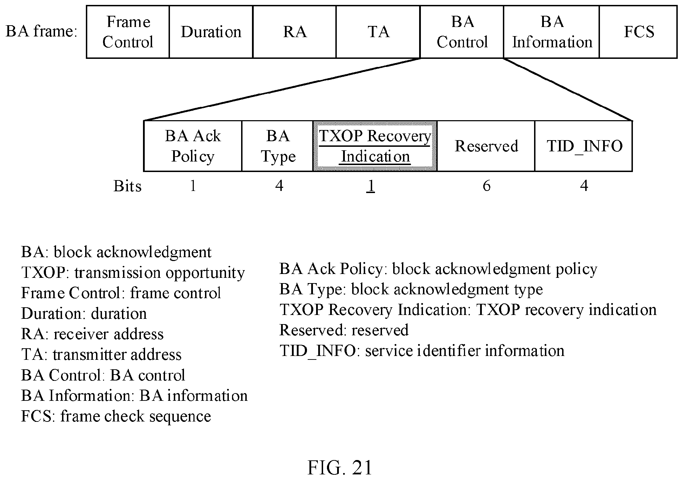

For ease of understanding, FIG. 21 shows a schematic diagram of a structure of the enhanced BA frame according to an embodiment of this application. As shown in FIG. 21, the BA frame may include a frame control (Frame Control) field, a duration (Duration) field, a receiver address (RA) field, a transmitter address (TA) field, a BA control (BA Control) field, a BA information (BA Information) field, a frame check sequence (FCS) field, and the like. The existing standard protocol (namely, the 802.11ax) specifies that the BA control field may include 16 bits. A first bit indicates a block acknowledgment policy (Block Ack Policy) field, a second bit to a fifth bit indicate a Block Acknowledgment Type (Block Type) field, a sixth bit to a twelfth bit indicate a reserved (Reserved) field, and a thirteenth bit to a sixteenth bit indicate a service identifier information (TID_INFO) field. To enhance the BA control field, at least one bit in the sixth bit to the twelfth bit in the BA control field may indicate the TXOP recovery indication field. For example, assuming that the one bit included in the reserved field in the BA control field indicates the TXOP recovery indication field, any one bit of the sixth bit to the twelfth bit may be set as the TXOP recovery indication field. For example, the sixth bit in the BA control field in FIG. 21 is set as the TXOP recovery indication field.

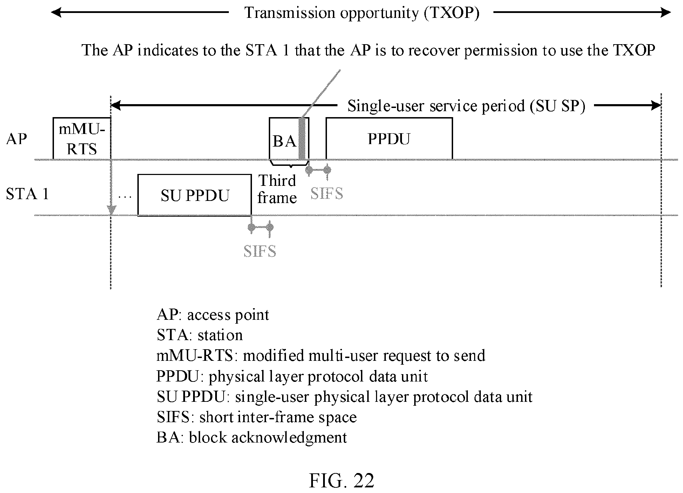

Further, FIG. 22 shows a schematic diagram of an application scenario in which the first device actively recovers the permission to use the TXOP according to this application. As shown in FIG. 22, in a UL scenario, for a process from a moment in which the first device (for example, an AP in FIG. 22) sends an mMU-RTS frame to a moment in which the second device (for example, a STA 1 in FIG. 22) sends an SU PPDU to a SU PPDU receiver (for example, the AP in FIG. 22) in the first time resource (for example, an SU SP in FIG. 22), refer to the process described in FIG. 2a. Details are not described herein again. When the AP needs to actively recover/withdraw the permission to use the TXOP, the AP may indicate, to the STA 1 by using any BA frame, that the AP is to withdraw the permission to use the TXOP. As shown in FIG. 22, the AP sends tone enhanced BA frame (namely, the third frame in this application) to the STA 1, and recover the permission to use the TXOP (for example, the AP sends a PPDU in FIG. 22) when a SIFS elapses after sending the enhanced BA frame.

Optionally, the frame structure of the BA frame may not be modified/enhanced, but another frame (namely, a fourth frame in this application) is aggregated with the BA frame. The another frame indicates the first device to actively recover the permission to use the TXOP. In other words, the third frame is an aggregated frame, and the aggregated frame is obtained by aggregating the BA frame with another frame (namely, the fourth frame). It should be understood that in this application, all fourth frames with such function are allowed to be aggregated. For example, an A-control field in the fourth frame includes third indication information. The third indication information indicates the first device to actively recover the permission to use the transmission opportunity TXOP. Specifically, the fourth frame may be a QoS data frame or a QoS null data frame, and the A-control field of the fourth frame carries a new type of A-control field (for example, a value of a control identifier is 7). For a frame structure of the fourth frame, refer to FIG. 7. Details are not described herein again. Optionally, a frame type field in the third frame indicates that the third frame is a control frame, and a frame subtype field in the third frame indicates that the third frame is an active recovery frame. The active recovery frame indicates the first device to actively recover the permission to use the transmission opportunity TXOP. In other words, another new control frame (for example, the frame type field is binary 01, and the frame subtype field is binary 1111) may be further designed to indicate the first device to actively recover the permission to use the transmission opportunity TXOP. For ease of description, the new control frame may be referred to as an active recovery frame. For a frame structure of the active recovery frame, refer to FIG. 8. Details are not described herein again.

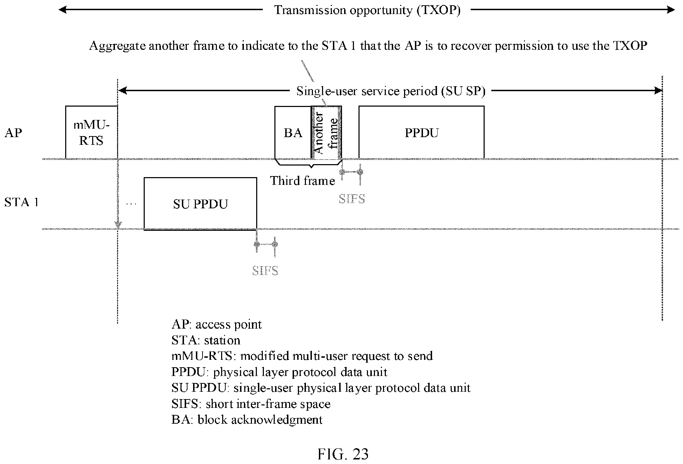

For ease of understanding, FIG. 23 shows another schematic diagram of an application scenario in which the first device actively recovers the permission to use the TXOP according to this application. As shown in FIG. 23, in the UL scenario, for a process from a moment in which the first device (for example, an AP in FIG. 23) sends an mMU-RTS frame to a moment in which the second device (for example, a STA 1 in FIG. 23) sends an SU PPDU to a SU PPDU receiver (for example, the AP in FIG. 23) in the first time resource (for example, an SU SP in FIG. 23), refer to the process described in FIG. 2a. Details are not described herein again. When the AP needs to actively recover/withdraw the permission to use the TXOP, the AP may aggregate any BA frame with another frame (namely, the fourth frame in this application). The aggregated another frame indicates, to the STA 1, that the AP is to recover the permission to use the TXOP. As shown in FIG. 23, after aggregating the BA frame with another frame into the third frame, the AP sends the third frame to the STA 1, to indicate to the STA 1 that the AP is to recover the permission to use the TXOP. The AP may withdraw the permission to use the TXOP (for example, the AP sends the PPDU in FIG. 23) when a SIFS elapses after sending the third frame.

S402: The first device sends the third frame to the second device.

In some feasible implementations, after determining the third frame, the first device may send the third frame to the second device. It may be understood that, the first device may withdraw the permission to use the TXOP when a SIFS elapses after sending the third frame. Alternatively, after sending the third frame, the first device may wait for the second device to resend a data frame for k times, and then withdraw the permission to use the TXOP. In other words, the first device may withdraw the permission to use the TXOP when preset duration T₀ elapses after sending the third frame. This is buffer time provided by the first device to the second device, or sufficient time is reserved for another preparation. For ease of description, "the first device may withdraw the permission to use the TXOP when a SIFS elapses after sending the third frame" may be briefly described as "the first device immediately withdraws the permission to use the TXOP", and "after sending the third frame, the first device may wait for the second device to resend a data frame for k times, and then withdraw the permission to use the TXOP" may be briefly described as "the first device delays withdrawing the permission to use the TXOP". k is an integer greater than 0 (for example, k = 1).

It may be understood that, when the second device receives the third frame from the first device, the second device no longer sends the data frame (in other words, when the first device immediately withdraws the permission to use the TXOP, the second device is not allowed to resend any data frame). Alternatively, the second device is allowed to resend the data frame for k times (in other words, the first device delays withdrawing the permission to use the TXOP, the second device may be allowed to resend the data frame for k more times). The third frame may be the enhanced BA frame, or may be the aggregated frame.

For ease of understanding, refer to FIG. 22 or FIG. 23. When the AP needs to actively recover/withdraw the permission to use the TXOP immediately, the AP may indicate, to the STA 1 by using any BA frame, that the AP is to immediately withdraw the permission to use the TXOP. In other words, the AP sends one enhanced BA frame to the STA 1, and recover the permission to use the TXOP (for example, the AP sends the PPDU in FIG. 22) when a SIFS elapses after sending the BA frame.

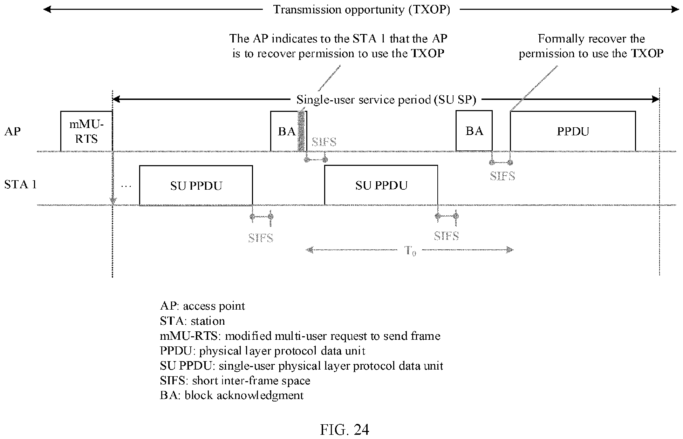

For ease of understanding, FIG. 24 shows another schematic diagram of an application scenario in which the first device actively recovers the permission to use the TXOP according to this application. As shown in FIG. 24, in the UL scenario, for a process from a moment in which the first device (for example, an AP in FIG. 24) sends an mMU-RTS frame to a moment in which the second device (for example, a STA 1 in FIG. 24) sends an SU PPDU to a SU PPDU receiver (for example, the AP in FIG. 24) in the first time resource (for example, an SU SP in FIG. 24), refer to the process described in FIG. 2a. Details are not described herein again. When the AP needs to actively withdraw the permission to use the TXOP, the AP may send the enhanced BA frame to the STA 1, to indicate to the STA 1 that the AP is to withdraw the permission to use the TXOP. In the scenario shown in FIG. 24, the AP may allow the STA 1 to resend the SU PPDU once (namely, k=1) after the STA 1 receives the enhanced BA frame. Therefore, after the AP sends the enhanced BA frame to the STA 1, the AP may formally withdraw/recover the permission to use the TXOP (for example, the AP sends the PPDU in FIG. 24) when duration T₀ elapses after completing sending the BA frame. T₀ = 3SIFS + SU PPDU + BA.

In this embodiment of this application, when the AP needs to withdraw the permission to use the TXOP for a reason (for example, an urgent service to be immediately transmitted arrives), the AP may actively recover/withdraw the permission of the AP to use the TXOP by sending the active recovery frame (namely, the third frame in this application). Such active withdrawal manner allows the AP to recover the permission to use the TXOP as required.

It should be noted that related features between the foregoing method embodiments may be combined. This is not limited herein in this application.

The foregoing content describes in detail the method provided in this application. To implement the foregoing solutions in embodiments of this application, embodiments of this application further provide corresponding apparatuses or devices.

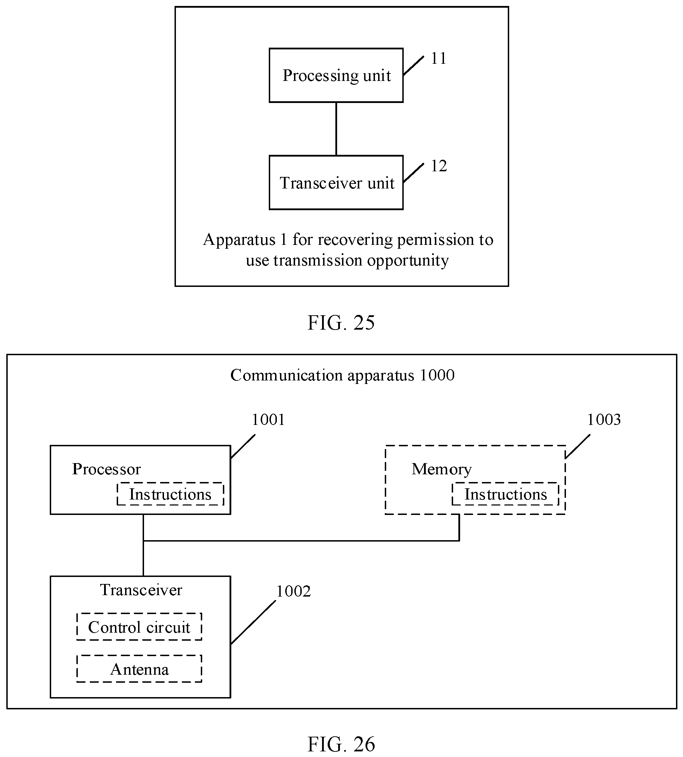

In the embodiments of this application, the first device and the second device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software function module. It should be noted that, in this embodiment of this application, module division is exemplary, and is merely a logical function division. In actual implementation, another division manner may be used. The following describes in detail an apparatus for recovering the permission to use the transmission opportunity according to an embodiment of this application with reference to FIG. 25 and FIG. 26.

When an integrated unit is used, FIG. 25 is a schematic diagram of a structure of an apparatus 1 for recovering permission to use a transmission opportunity according to an embodiment of this application. The apparatus for recovering the permission to use the transmission opportunity may be a first device or a chip in the first device, for example, a Wi-Fi chip. As shown in FIG. 25, the apparatus for recovering the permission to use the transmission opportunity includes a processing unit 11 and a transceiver unit 12.

In a design, the transceiver unit 12 is configured to receive a first frame from a second device. The first frame indicates that the second device has stopped using a first time resource. The first time resource is allocated by the first device from an obtained transmission opportunity TXOP to the second device. The first time resource is allocated by the first device to the second device by using a single-user trigger frame. The processing unit 11 is configured to recover permission to use the TXOP based on the first frame.

Optionally, the first time resource is used for transmission of an uplink single-user physical layer protocol data unit PPDU or used for point-to-point P2P communication. The single-user trigger frame includes a first field and a second field. The first field indicates a remaining time resource of the TXOP, and the second field indicates the first time resource.

Optionally, the first frame carries first indication information. The first indication information indicates that the second device has stopped using the first time resource.

Optionally, the first frame further carries second indication information. The second indication information indicates whether the second device further needs a time resource for data transmission.

Optionally, an A-control field in the first frame includes the first indication information. Alternatively, an A-control field in the first frame includes the first indication information and the second indication information.

Optionally, a control identifier of the A-control field is a first value. The first value indicates that the A-control field includes the first indication information.

Optionally, a control identifier of the A-control field is a second value. The second value indicates that the A-control field is a command and status CAS control field. The first indication information is carried in a reverse grant RDG subfield in the CAS control field. Alternatively, the first indication information is carried in an RDG subfield in the CAS control field, and the second indication information is carried in at least one bit in a fourth bit to an eighth bit in the CAS control field.

Optionally, a frame type field in the first frame indicates that the first frame is a control frame, and a frame subtype field in the first frame indicates that the first frame is a time resource return frame. The time resource return frame indicates that the second device has stopped using the first time resource.

In another design, the transceiver unit 12 is configured to receive a second frame. The processing unit 11 is configured to: when duration between an end moment of the second frame and an end moment of a first time resource is less than preset duration T, recover the permission to use the transmission opportunity TXOP. A destination address of the second frame is an address of a second device. Alternatively, a transmitter address of the second frame is an address of a second device, and the second frame is a frame that does not solicit a response frame. The first time resource is allocated by the first device from the obtained TXOP to the second device.

Optionally, the transceiver unit 12 is further configured to: when the duration between the end moment of the second frame and the end moment of the first time resource is greater than T, receive a first frame from the second device. The first frame indicates that the second device has stopped using the first time resource.

Optionally, the first time resource is used for transmission of an uplink single-user physical layer protocol data unit PPDU or used for point-to-point P2P communication. The single-user trigger frame includes a first field and a second field. The first field indicates a remaining time resource of the TXOP, and the second field indicates the first time resource.

Optionally, the first frame carries first indication information. The first indication information indicates that the second device has stopped using the first time resource.

Optionally, the first frame further carries second indication information. The second indication information indicates whether the second device further needs a time resource for data transmission.

Optionally, an A-control field in the first frame includes the first indication information. Alternatively, an A-control field in the first frame includes the first indication information and the second indication information.

Optionally, a control identifier of the A-control field is a first value. The first value indicates that the A-control field includes the first indication information.

Optionally, a control identifier of the A-control field is a second value. The second value indicates that the A-control field is a command and status CAS control field. The first indication information is carried in a reverse grant RDG subfield in the CAS control field. Alternatively, the first indication information is carried in an RDG subfield in the CAS control field, and the second indication information is carried in at least one bit in a fourth bit to an eighth bit in the CAS control field.

Optionally, a frame type field in the first frame indicates that the first frame is a control frame, and a frame subtype field in the first frame indicates that the first frame is a time resource return frame. The time resource return frame indicates that the second device has stopped using the first time resource.

In another design, the transceiver unit 12 is configured to send a second frame, where a destination address of the second frame is an address of a second device. The processing unit 11 is configured to: when duration between an end moment of the second frame and an end moment of a first time resource is less than preset duration T, determine to recover the permission to use the transmission opportunity TXOP. The first time resource is allocated by the first device from the obtained TXOP to the second device.

Optionally, the processing unit 11 is further configured to: when the duration between the end moment of the second frame and the end moment of the first time resource is greater than T, receive a first frame from the second device by using the transceiver unit 12. The first frame indicates that the second device has stopped using the first time resource.

Optionally, the first time resource is used for transmission of an uplink single-user physical layer protocol data unit PPDU or used for point-to-point P2P communication. The single-user trigger frame includes a first field and a second field. The first field indicates a remaining time resource of the TXOP, and the second field indicates the first time resource.

Optionally, the first frame carries first indication information. The first indication information indicates that the second device has stopped using the first time resource.

Optionally, the first frame further carries second indication information. The second indication information indicates whether the second device further needs a time resource for data transmission.

Optionally, an A-control field in the first frame includes the first indication information. Alternatively, an A-control field in the first frame includes the first indication information and the second indication information.

Optionally, a control identifier of the A-control field is a first value. The first value indicates that the A-control field includes the first indication information.

Optionally, a control identifier of the A-control field is a second value. The second value indicates that the A-control field is a command and status CAS control field.

The first indication information is carried in a reverse grant RDG subfield in the CAS control field.

Alternatively, the first indication information is carried in an RDG subfield in the CAS control field, and the second indication information is carried in at least one bit in a fourth bit to an eighth bit in the CAS control field.

Optionally, a frame type field in the first frame indicates that the first frame is a control frame, and a frame subtype field in the first frame indicates that the first frame is a time resource return frame. The time resource return frame indicates that the second device has stopped using the first time resource.

In another design, the processing unit 11 is configured to determine a third frame. The transceiver unit 12 is configured to send the third frame to a second device. The third frame indicates the first device to actively recover the permission to use the transmission opportunity TXOP.

Optionally, the third frame is a block acknowledgment BA frame returned by the first device based on a data frame received from the second device. A BA control field in the BA frame indicates the first device to actively recover the permission to use the TXOP.

Optionally, the third frame is an aggregated frame, and the aggregated frame is obtained by aggregating a fourth frame with the BA frame. The fourth frame indicates the first device to actively recover the permission to use the TXOP. The BA frame is generated by the first device based on the data frame received from the second device.

Optionally, an A-control field in the fourth frame includes third indication information. The third indication information indicates the first device to actively recover the permission to use the TXOP.

Optionally, a control identifier of the A-control field is a third value. The third value indicates that the A-control field includes the third indication information.

Optionally, a frame type field in the third frame indicates that the third frame is a control frame, and a frame subtype field in the third frame indicates that the third frame is an active recovery frame. The active recovery frame indicates the first device to actively recover the permission to use the transmission opportunity TXOP.

It should be understood that the apparatus 1 for recovering the permission to use the transmission opportunity may correspondingly perform the steps in the foregoing method embodiments, and the foregoing operations or functions of the units in the apparatus 1 for recovering the permission to use the transmission opportunity are separately used to implement corresponding operations performed by the first device in the foregoing method embodiments. For corresponding beneficial effects, refer to the method embodiments. For brevity, details are not described herein again.

Refer to FIG. 25. The apparatus for recovering the permission to use the transmission opportunity may alternatively be the second device or a chip in the second device, for example, a Wi-Fi chip. As shown in FIG. 25, the apparatus for recovering the permission to use the transmission opportunity includes the processing unit 11 and the transceiver unit 12.

In a design, the processing unit 11 is configured to determine a first frame. The first frame indicates that the second device has stopped using a first time resource. The first time resource is allocated by the first device from an obtained transmission opportunity TXOP to the second device. The first time resource is allocated by the first device to the second device by using a single-user trigger frame. The transceiver unit 12 is configured to send the first frame to the first device.

Optionally, the first time resource is used for transmission of an uplink single-user physical layer protocol data unit PPDU or used for point-to-point P2P communication. The single-user trigger frame includes a first field and a second field. The first field indicates a remaining time resource of the TXOP, and the second field indicates the first time resource.

Optionally, the first frame carries first indication information. The first indication information indicates that the second device has stopped using the first time resource.

Optionally, the first frame further carries second indication information. The second indication information indicates whether the second device further needs a time resource for data transmission.

Optionally, an A-control field in the first frame includes the first indication information. Alternatively, an A-control field in the first frame includes the first indication information and the second indication information.

Optionally, a control identifier of the A-control field is a first value. The first value indicates that the A-control field includes the first indication information.

Optionally, a control identifier of the A-control field is a second value. The second value indicates that the A-control field is a command and status CAS control field. The first indication information is carried in a reverse grant RDG subfield in the CAS control field. Alternatively, the first indication information is carried in an RDG subfield in the CAS control field, and the second indication information is carried in at least one bit in a fourth bit to an eighth bit in the CAS control field.

Optionally, a frame type field in the first frame indicates that the first frame is a control frame, and a frame subtype field in the first frame indicates that the first frame is a time resource return frame. The time resource return frame indicates that the second device has stopped using the first time resource.

Optionally, if the first frame is a quality of service QoS null data frame, or the first frame is the time resource return frame, if an end moment of the first frame is later than an end moment of the first time resource, and a start moment of the first frame is earlier than the end moment of the first time resource, the second device sends the first frame to the first device.

In another design, the transceiver unit 12 is configured to receive or send a second frame. The second frame is a frame that does not solicit a response frame. When duration between an end moment of the second frame and an end moment of a first time resource is less than preset duration T, the second device no longer sends a PPDU.

Optionally, the second device further includes a processing unit 11. The processing unit 11 is configured to: when the duration between the end moment of the second frame and the end moment of the first time resource is greater than the preset duration T, determine to send a first frame to the first device by using the transceiver unit 12. The first frame indicates that the second device has stopped using the first time resource. The first time resource is allocated by the first device from the obtained TXOP to the second device.

Optionally, the first time resource is used for transmission of an uplink single-user physical layer protocol data unit PPDU or used for point-to-point P2P communication. The single-user trigger frame includes a first field and a second field. The first field indicates a remaining time resource of the TXOP, and the second field indicates the first time resource.

Optionally, the first frame carries first indication information. The first indication information indicates that the second device has stopped using the first time resource.

Optionally, the first frame further carries second indication information. The second indication information indicates whether the second device further needs a time resource for data transmission.

Optionally, an A-control field in the first frame includes the first indication information. Alternatively, an A-control field in the first frame includes the first indication information and the second indication information.

Optionally, a control identifier of the A-control field is a first value. The first value indicates that the A-control field includes the first indication information.

Optionally, a control identifier of the A-control field is a second value. The second value indicates that the A-control field is a command and status CAS control field.

The first indication information is carried in a reverse grant RDG subfield in the CAS control field.

Alternatively, the first indication information is carried in an RDG subfield in the CAS control field, and the second indication information is carried in at least one bit in a fourth bit to an eighth bit in the CAS control field.

Optionally, a frame type field in the first frame indicates that the first frame is a control frame, and a frame subtype field in the first frame indicates that the first frame is a time resource return frame. The time resource return frame indicates that the second device has stopped using the first time resource.

Optionally, when the first frame is a quality of service QoS null data frame, or the first frame is the time resource return frame, if an end moment of the first frame is later than an end moment of the first time resource, and a start moment of the first frame is earlier than the end moment of the first time resource, the second device is allowed to send the first frame to the first device.

In another design, the transceiver unit 12 is configured to receive the second frame from the first device. The processing unit 11 is configured to: when duration between an end moment of the second frame and an end moment of a first time resource is less than preset duration T, determine that the second device no longer sends a PPDU.

Optionally, the processing unit 11 is further configured to: when the duration between the end moment of the second frame and the end moment of the first time resource is greater than the preset duration T, determine to send a first frame to the first device by using the transceiver unit 12. The first frame indicates that the second device has stopped using a first time resource. The first time resource is allocated by the first device from the obtained TXOP to the second device.

Optionally, the first time resource is used for transmission of an uplink single-user physical layer protocol data unit PPDU or used for point-to-point P2P communication. The single-user trigger frame includes a first field and a second field. The first field indicates a remaining time resource of the TXOP, and the second field indicates the first time resource.

Optionally, the first frame carries first indication information. The first indication information indicates that the second device has stopped using the first time resource.

Optionally, the first frame further carries second indication information. The second indication information indicates whether the second device further needs a time resource for data transmission.

Optionally, an A-control field in the first frame includes the first indication information. Alternatively, an A-control field in the first frame includes the first indication information and the second indication information.

Optionally, a control identifier of the A-control field is a first value. The first value indicates that the A-control field includes the first indication information.

Optionally, a control identifier of the A-control field is a second value. The second value indicates that the A-control field is a command and status CAS control field.

The first indication information is carried in a reverse grant RDG subfield in the CAS control field.

Alternatively, the first indication information is carried in an RDG subfield in the CAS control field, and the second indication information is carried in at least one bit in a fourth bit to an eighth bit in the CAS control field.

Optionally, a frame type field in the first frame indicates that the first frame is a control frame, and a frame subtype field in the first frame indicates that the first frame is a time resource return frame. The time resource return frame indicates that the second device has stopped using the first time resource.

Optionally, when the first frame is a quality of service QoS null data frame, or the first frame is the time resource return frame, if an end moment of the first frame is later than an end moment of the first time resource, and a start moment of the first frame is earlier than the end moment of the first time resource, the second device is allowed to send the first frame to the first device.

In another design, the processing unit 11 is configured to: when the second device receives a third frame from a first device, determine that the second device does not send a data frame by using the transceiver unit 12, or resends a data frame for k times by using the transceiver unit 12. The third frame indicates the first device to actively recover the permission to use the transmission opportunity TXOP. k is an integer greater than 0.

Optionally, the third frame is a block acknowledgment BA frame returned by the first device based on a data frame received from the second device. A BA control field in the BA frame indicates the first device to actively recover the permission to use the TXOP.

Optionally, the third frame is an aggregated frame, and the aggregated frame is obtained by aggregating a fourth frame with the BA frame. The fourth frame indicates the first device to actively recover the permission to use the TXOP. The BA frame is generated by the first device based on the data frame received from the second device.

Optionally, an A-control field in the fourth frame includes third indication information. The third indication information indicates the first device to actively recover the permission to use the TXOP.

Optionally, a control identifier of the A-control field is a third value. The third value indicates that the A-control field includes the third indication information.

Optionally, a frame type field in the third frame indicates that the third frame is a control frame, and a frame subtype field in the third frame indicates that the third frame is an active recovery frame. The active recovery frame indicates the first device to actively recover the permission to use the transmission opportunity TXOP.

It should be understood that the apparatus 1 for recovering the permission to use the transmission opportunity may further correspondingly perform the steps in the foregoing method embodiments, and the foregoing operations or functions of the units in the apparatus 1 for recovering the permission to use the transmission opportunity are separately used to implement corresponding operations performed by the second device in the foregoing method embodiments. For corresponding beneficial effects, refer to the method embodiments. For brevity, details are not described herein again.

The foregoing describes the first device and the second device in the embodiments of this application. The following describes possible product forms of the first device and the second device. It should be understood that any form of product having a function of the first device in FIG. 25 or any form of product having a function of the second device in FIG. 25 or both fall within the protection scope of embodiments of this application. It should be further understood that the following description is merely an example, and the product forms of the first device and the second device in embodiments of this application is not limited thereto.

In a possible product form, the first device and the second device in embodiment of this application may be implemented by using a general bus architecture.

For ease of description, FIG. 26 shows a schematic diagram of a structure of a communication apparatus 1000 according to an embodiment of this application. The communication apparatus 1000 may be a first device, a second device, or a chip in the first device or the second device. FIG. 26 shows only main components of the communication apparatus 1000. In addition to the processor 1001 and the transceiver 1002, the communication apparatus may further include a memory 1003 and an input/output apparatus (not shown in the figure).

The processor 1001 is mainly configured to process a communication protocol and communication data, control the communication apparatus, execute a software program, and process data of the software program. The memory 1003 is mainly configured to store the software program and the data. The transceiver 1002 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus such as a touchscreen, a display, or a keyboard is mainly configured to receive data entered by a user, and output data to the user.

After the communication apparatus is powered on, the processor 1001 may read the software program in the memory 1003, interpret and execute instructions of the software program, and process the data of the software program. When data needs to be sent wirelessly, after performing baseband processing on the to-be-sent data, the processor 1001 outputs a baseband signal to a radio frequency circuit. After performing radio frequency processing on the baseband signal, the radio frequency circuit sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independent of the processor that performs baseband processing. For example, in a distributed scenario, the radio frequency circuit and the antenna may be separately disposed independent of the communication apparatus.

The processor 1001, the transceiver 1002, and the memory 1003 may be connected through a communication bus.

In a design, the communication apparatus 1000 may be configured to perform a function of the first device in the foregoing method embodiment. The processor 1001 may be configured to perform step S102 in FIG. 3, and/or step S202 in FIG. 16, and/or step S302 in FIG. 18, and/or step S401 in FIG. 20, and/or another process of the technology described in this specification. The transceiver 1002 may be configured to perform step S101 in FIG. 3, and/or step S201 in FIG. 16, and/or step S301 in FIG. 18, and/or step S402 in FIG. 20, and/or another process of the technology described in this specification.

In another design, the communication apparatus 1000 may be configured to perform a function of the second device in the foregoing method embodiment. The processor 1001 may be configured to determine the first frame in step S101 in FIG. 3, and/or step S202 in FIG. 16, and/or step S302 in FIG. 18, and/or step S402 in FIG. 20, and/or another process of the technology described in this specification. The transceiver 1002 may be configured to send the first frame in step S101 in FIG. 3, and/or step S201 in FIG. 16, and/or step S301 in FIG. 18, and/or step S401 in FIG. 20, and/or another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing method embodiments. The computer program may be fixed in the processor 1001, and in this case, the processor 1001 may be implemented by hardware.

In an implementation, the communication apparatus 1000 may include a circuit, and the circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed signal IC, an application-specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 26. The communication apparatus may be an independent device or may be a part of a larger device. For example, the communication apparatus may be:
(1) an independent integrated circuit IC, a chip, or a chip system or subsystem;
(2) a set including one or more ICs, where optionally, the IC set may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

In a possible product form, the first device and the second device in embodiments of this application may be implemented by general-purpose processors.

A general-purpose processor for implementing the first device includes a processing circuit and an input/output interface that is internally connected to and communicates with the processing circuit.

In a design, the general-purpose processor may be configured to perform a function of the first device in the foregoing method embodiment. Specifically, the processing circuit is configured to perform step S102 in FIG. 3, and/or step S202 in FIG. 16, and/or step S302 in FIG. 18, and/or step S401 in FIG. 20, and/or another process of the technology described in this specification. The input/output interface is configured to perform step S101 in FIG. 3, and/or step S201 in FIG. 16, and/or step S301 in FIG. 18, and/or step S402 in FIG. 20, and/or another process of the technology described in this specification.

A general-purpose processor for implementing the second device includes a processing circuit and an input/output interface that is internally connected to and communicates with the processing circuit.

In a design, the general-purpose processor may be configured to perform a function of the second device in the foregoing method embodiment. Specifically, the processing circuit is configured to determine the first frame in step S101 in FIG. 3, and/or step S202 in FIG. 16, and/or step S302 in FIG. 18, and/or step S40 in FIG. 20, and/or another process of the technology described in this specification. The input/output interface is configured to send the first frame in step S101 in FIG. 3, and/or step S201 in FIG. 16, and/or step S301 in FIG. 18, and/or step S402 in FIG. 20, and/or another process of the technology described in this specification.

It should be understood that the communication apparatuses in the foregoing various product forms have any function of the first device or the second device in the foregoing method embodiments, may correspondingly perform the steps in the foregoing method embodiments, and achieve corresponding technical effects. For brevity, details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including a first device and a second device. The first device and the second device may perform the method in any one of the foregoing embodiments.

Method or algorithm steps described in combination with the content disclosed in this application may be implemented by using hardware, or may be implemented by using a processor by executing a software instruction. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in an interface device of a core network. Certainly, the processor and the storage medium may exist in the core network interface device as discrete components.

A person skilled in the art should be aware that in one or more of the foregoing examples, the functions described in this application may be implemented by using hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and beneficial effects of this application are further described in detail.

## Claims

1. A method for recovering permission to use a transmission opportunity performed by a first device, the method comprising the steps of:
• sending, to a second device, a single-user trigger frame, wherein the single-user trigger frame indicates that a time resource is allocated by the first device from an obtained transmission opportunity, TXOP, to the second device;
• receiving (S 101) a quality of service, QoS, data frame from the second device, wherein the QoS data frame carries first indication information, wherein the first indication information indicates that the second device has stopped using the time resource, wherein an A-control field in the QoS data frame comprises the first indication information; and
• recovering (S 102) a permission to use the TXOP based on the QoS data frame.

2. The method according to claim 1, wherein the time resource is used for a transmission of an uplink single-user physical layer protocol data unit, PPDU, or used for a point-to-point, P2P, communication, and the single-user trigger frame comprises a first field and a second field, wherein the first field indicates a remaining time resource of the TXOP, and the second field indicates the time resource allocated to the second device.

3. The method according to any of the preceding claims, wherein the QoS data frame further carries second indication information, wherein the second indication information indicates whether the second device further needs a time resource for data transmission.

4. The method according to any of the preceding claims, wherein:
a control identifier of the A-control field is a value indicating that the A-control field is a command and status, CAS, control field; and
the first indication information is carried in a reverse grant, RDG, subfield in the CAS control field.

5. A first device comprising a processor and a memory, wherein the memory is configured to store a computer program, wherein, when the processor executes the computer program, the processor is caused to perform the method of any one of claims 1 to 4.

6. A computer-readable storage medium, wherein the computer-readable storage medium stores program instructions, and when the program instructions are run on a first device, the first device is caused to perform the method according to any one of claims 1 to 4.

## Patentansprüche

1. Verfahren zum Wiederherstellen einer Berechtigung, eine Übertragungsgelegenheit zu verwenden, das durch eine erste Einrichtung durchgeführt wird, wobei das Verfahren die folgenden Schritte umfasst:
• Senden, an eine zweite Einrichtung, eines Einzelbenutzer-Auslöseframes, wobei das Einzelbenutzer-Auslöseframe angibt, dass der zweiten Einrichtung durch die erste Einrichtung eine Zeitressource aus einer erlangten Übertragungsgelegenheit, TXOP, zugewiesen wird;
• Empfangen (S 101) eines Quality-of-Service-Datenframes, QoS-Datenframes, von der zweiten Einrichtung, wobei das QoS-Datenframe erste Angabeinformationen enthält, wobei die ersten Angabeinformationen angeben, dass die zweite Einrichtung aufgehört hat, die Zeitressource zu verwenden, wobei ein A-Steuerfeld in dem QoS-Datenframe die ersten Angabeinformationen umfasst; und
• Wiederherstellen (S 102) einer Berechtigung, die TXOP zu verwenden, basierend auf dem QoS-Datenframe.

2. Verfahren nach Anspruch 1, wobei die Zeitressource für eine Übertragung einer Uplink-Einzelbenutzer-Protokolldateneinheit einer physikalischen Schicht, Uplink-Einzelbenutzer-PPDU, verwendet wird oder für eine Punkt-zu-Punkt-Kommunikation, P2P-Kommunikation, verwendet wird und das Einzelbenutzer-Auslöseframe ein erstes Feld und ein zweites Feld umfasst, wobei das erste Feld eine verbleibende Zeitressource der TXOP angibt und das zweite Feld die Zeitressource angibt, die der zweiten Einrichtung zugewiesen ist.

3. Verfahren nach einem der vorhergehenden Ansprüche, wobei das QoS-Datenframe ferner zweite Angabeinformationen enthält, wobei die zweiten Angabeinformationen angeben, ob die zweite Einrichtung ferner einer Zeitressource zur Datenübertragung bedarf.

4. Verfahren nach einem der vorhergehenden Ansprüche, wobei:
eine Steuerkennung des A-Steuerfelds ein Wert ist, der angibt, dass das A-Steuerfeld ein Befehls- und Statussteuerfeld, CAS-Steuerfeld, ist; und
die ersten Angabeinformationen in einem umgekehrten Erteilungsunterfeld, RDG-Unterfeld, in dem CAS-Steuerfeld enthalten sind.

5. Erste Einrichtung, umfassend einen Prozessor und einen Speicher, wobei der Speicher dazu konfiguriert ist, ein Computerprogramm zu speichern, wobei, wenn der Prozessor das Computerprogramm ausführt, der Prozessor dazu veranlasst wird, das Verfahren nach einem der Ansprüche 1 bis 4 durchzuführen.

6. Computerlesbares Speichermedium, wobei das computerlesbare Speichermedium Programmanweisungen speichert und, wenn die Programmanweisungen auf einer ersten Einrichtung laufen, die erste Einrichtung dazu veranlasst wird, das Verfahren nach einem der Ansprüche 1 bis 4 durchzuführen.

## Revendications

1. Procédé de récupération de droit d'utiliser une opportunité de transmission réalisé par un premier dispositif, le procédé comprenant les étapes :
• d'envoi, à un second dispositif, d'une trame de déclenchement mono-utilisateur, dans lequel la trame de déclenchement mono-utilisateur indique qu'une ressource temporelle est allouée par le premier dispositif à partir d'une opportunité de transmission, TXOP, obtenue au second dispositif ;
• de réception (S 101) d'une trame de données de qualité de service, QoS, à partir du second dispositif, dans lequel la trame de données QoS transporte de premières informations d'indication, dans lequel les premières informations d'indication indiquent que le second dispositif a cessé d'utiliser la ressource temporelle, dans lequel un champ de commande A de la trame de données QoS comprend les premières informations d'indication ; et
• de récupération (S 102) d'un droit d'utiliser le TXOP sur la base de la trame de données QoS.

2. Procédé selon la revendication 1, dans lequel la ressource temporelle est utilisée pour une transmission d'une unité de données de protocole de couche physique, PPDU, mono-utilisateur de liaison montante ou utilisée pour une communication point à point, P2P, et la trame de déclenchement mono-utilisateur comprend un premier champ et un second champ, dans lequel le premier champ indique une ressource temporelle restante du TXOP, et le second champ indique la ressource temporelle allouée au second dispositif.

3. Procédé selon l'une quelconque des revendications précédentes, dans lequel la trame de données QoS transporte également de secondes informations d'indication, dans lequel les secondes informations d'indication indiquent si le second dispositif a également besoin d'une ressource temporelle pour la transmission de données.

4. Procédé selon l'une quelconque des revendications précédentes, dans lequel :
un identifiant de commande du champ de commande A est une valeur indiquant que le champ de commande A est un champ de commande de commande et d'état, CAS ; et
les premières informations d'indication sont transportées dans un sous-champ d'attribution inverse, RDG, dans le champ de commande CAS.

5. Premier dispositif comprenant un processeur et une mémoire, dans lequel la mémoire est configurée pour stocker un programme informatique, dans lequel, lorsque le processeur exécute le programme informatique, le processeur est amené à réaliser le procédé selon l'une quelconque des revendications 1 à 4.

6. Support de stockage lisible par ordinateur, dans lequel le support de stockage lisible par ordinateur stocke des instructions de programme, et lorsque les instructions de programme sont exécutées sur un premier dispositif, le premier dispositif est amené à réaliser le procédé selon l'une quelconque des revendications 1 à 4.
